# EUROPÄISCHE PATENTSCHRIFT

(11) **EP 4 500 085 B1**
(45) Veröffentlichungstag und Bekanntmachung des Hinweises auf die Patenterteilung: **12.08.2026**
(21) Anmeldenummer: 23713860.7
(22) Anmeldetag: 21.03.2023
(51) Int. Cl.: F23R 3/28

(54) **DÜSENBAUGRUPPE MIT GEGEN EINE EINSTRÖMUNG VON LUFT ABGEDICHTETEM ZENTRALEN KRAFTSTOFFROHR**
NOZZLE ASSEMBLY WITH A CENTRAL FUEL PIPE THAT IS SEALED AGAINST AN IN-FLOW OF AIR
ENSEMBLE INJECTEUR COMPRENANT UN TUYAU DE CARBURANT CENTRAL RENDU ÉTANCHE À UN FLUX D'AIR ENTRANT

(30) Priorität: 24.03.2022 DE 102022202936
(43) Veröffentlichungstag der Anmeldung: 05.02.2025
(73) Patentinhaber: Rolls-Royce Deutschland Ltd & Co KG, 15827 Blankenfelde-Mahlow (DE)
(72) Erfinder: CLEMEN, Carsten, 15827 Blankenfelde-Mahlow (DE); GEBEL, Gregor Christoffer, 15827 Blankenfelde-Mahlow (DE)
(86) Internationale Anmeldenummer: PCT/EP2023/057214
(87) Internationale Veröffentlichungsnummer: WO 2023/180320

(56) Entgegenhaltungen:
- US-A- 3 691 765
- US-A- 4 327 547
- US-A- 4 342 198
- US-A1- 2012 292 408
- US-B1- 6 289 676

## Beschreibung

Die vorgeschlagene Lösung betrifft eine Düsenbaugruppe für eine Brennkammer eines Triebwerks mit wenigstens einer Düse zum Eindüsen von gasförmigem Kraftstoff, insbesondere Wasserstoff, in einen Brennraum der Brennkammer, gemäß Oberbegriff des Anspruchs 1 und des Anspruchs 2.

Eine Düsenbaugruppe ist in der US 4 342 198 A angegeben. Bei dieser bekannten Düsenbaugruppe für eine Brennkammer ist zum Eindüsen von Kraftstoff in einen Brennraum eine Düse mit einem Düsenkörper und einem Düsenhalter vorhanden, in dem eine Kraftstoffzuleitung für flüssigen Kraftstoff und daneben auch eine Zuleitung für gasförmigen Kraftstoff angeordnet sind. Die Zuleitung für flüssigen Kraftstoff führt in eine Kammer, die in einem Gehäuse innerhalb des Düsenkörpers vorhanden ist. Eine Hülse erstreckt sich in die Kammer und ist in einer zentralen Bohrung des Gehäuses angeordnet und weist einen Kraftstoffeinlass und eine Anzahl von ersten Kraftstoffdurchlässen sowie einen Hauptkraftstoffdurchlass auf, der mittels eines Ventils geschlossen ist, welches mittels Federkraft in der geschlossenen Position gehalten wird.

Bei einer in der US 4 327 547 A gezeigten Düsenbaugruppe für eine Brennkammer sind ein erster Düsenkörper und ein darin angeordneter zweiter Düsenkörper vorhanden, wobei der erste Düsenkörper eine Kraftstoffzuleitung für flüssigen Kraftstoff und eine Kraftstoffzuleitung für gasförmigen Kraftstoff aufweist. Zwischen dem ersten Düsenkörper und dem zweiten Düsenkörper ist ein erster Strömungspfad gebildet und im Zentrum des zweiten Körpers ist ein zweiter Strömungspfad vorhanden. Die Zuführleitung für den flüssigen Kraftstoff ist über einen Verteiler und eine Anzahl von tangentialen Bohrungen in den ersten Strömungspfad zwischen dem ersten und zweiten Düsenkörper geführt. Im Betrieb strömt flüssiger Kraftstoff durch die tangentialen Bohrungen in den ersten Strömungspfad, wobei eine Schicht flüssigen Kraftstoffs auf der äußeren Wand des ersten Strömungspfads gebildet wird und mittels durch den ersten Strömungspfad strömender komprimierter Luft zerstäubt und beschleunigt als Kraftstoff-Luftgemisch in Richtung Brennkammer abströmt.

Die US 3 691 765 A zeigt eine Düsenbaugruppe für eine Brennkammer zum Eindüsen von Kraftstoff in einen Brennraum mit einem Düsenkörper, in dem Kraftstoffzuführleitungen angeordnet sind und der einen zentralen Düsenkörper umfasst. Durch den zentralen Düsenkörper wird durch eine zentrale Bohrung über eine stromaufseitige Öffnung Pilot-Kraftstoff zugeführt. Die so gebildete zentrale Zuführdüse für den Pilotkraftstoff ist konzentrisch von einer ringförmigen Düse umgeben, über die der Haupt-Kraftstoff zugeführt wird. Am stromaufseitigen Ende der Zuführbohrung für den Pilot-Kraftstoff ist im Bereich einer Stirnwand ein Zuführraum für den Pilot-Kraftstoff gebildet, der mit der zentralen Bohrung für den Pilot-Kraftstoff verbunden ist.

Eine weitere Düsenbaugruppe für eine Brennkammer zum Eindüsen von Kraftstoff in einen Brennraum in Verbindung mit einem Triebwerk ist in der US 2012/292408 A1 gezeigt. Dabei umfasst eine Düse einen Düsenhauptkörper und einen mit diesem verbundenen Düsenhalter, der eine Kraftstoffzuleitung aufweist. In dem Düsenhauptkörper ist ein zentraler Kraftstoffzuführkanal angeordnet, der an seinem stromaufseitigen Ende mit der in einem Düsenhalter angeordneten Kraftstoffzuleitung verbunden ist. Die zentrale Kraftstoffzuführung in dem Düsenhauptkörper weist an ihrem dem Brennraum zugewandten stromabseitigen Ende einen als Druckzerstäuber ausgebildeten Kraftstoffinjektor auf.

Düsenbaugruppen für Brennkammern für Triebwerke sind weithin in unterschiedlicher Ausprägung bekannt. Fokus bisher üblicher Düsen solcher Düsenbaugruppen ist die Eindüsung von Kraftstoffen, bei welcher vor allem im Falle gasförmiger Kraftstoffe bereits innerhalb der Düse eine Vermischung des Kraftstoffs mit Luft erfolgt, um so unmittelbar stromab des Düsenendes ein brennbares Kraftstoff-Luft-Gemisch zu erzeugen. Bei Anwendungen hingegen die mit flüssigen Kraftstoffen betrieben werden, z.B. Kerosin oder Diesel, wird häufig die Luftströmung durch die Düse zur Zerstäubung (oder zumindest deren Unterstützung) der Kraftstoffe zu Sprays innerhalb der Düse oder direkt stromab derselbigen genutzt. Typischerweise wird bei beiden genannten Ansätzen die zuzumischende Luft bereits innerhalb der Düse verdrallt, sodass stromab des Düsenendes eine drallbehaftete Kraftstoff-LuftStrömung mit Turbulenz und Rezirkulation entsteht, die für eine Verbrennung als vorteilhaft eingestuft wird.

In neuerer Zeit werden verstärkt Konzepte für Flugtriebwerke entwickelt, bei denen das Triebwerk teilweise oder vollständig mit Wasserstoff oder anderen gasförmig einzudüsenden Kraftstoffen betrieben wird, wie dies zum Beispiel in der US 4,713,938 A1 für eine Gasturbine zur Stromerzeugung angedacht ist. Soll dann aber ein Triebwerk bei möglichst gleichbleibender Konstruktion z.B. mit Wasserstoff anstelle von Kerosin oder Diesel betrieben werden, ist eine abweichende Eindüsung notwendig, da der Kraftstoff gasförmig in den Brennraum eingebracht wird und im Falle von z.B. Wasserstoff zudem deutlich kürzere Zündverzugszeiten und höhere Flammengeschwindigkeiten aufweist.

Vor diesem Hintergrund ist die Düsenbaugruppe des Anspruchs 1 und des Anspruchs 2 vorgeschlagen, die insbesondere eine Düse zum Eindüsen von Wasserstoff in einen Brennraum einer triebwerkseitigen Brennkammer umfasst, die jedoch auch zum Eindüsen von anderen Kraftstoffen, insbesondere gasförmigen Kraftstoffen geeignet ist.

Eine vorgeschlagene Düsenbaugruppe umfasst hierbei eine Düse mit einem Düsenhauptkörper, der ein zentrales, sich entlang der Düsenlängsachse erstreckendes und gegen eine Einströmung von Luft abgedichtetes Kraftstoffrohr umfasst. In dem Kraftstoffrohr ist über mindestens eine Kraftstoffzuleitung in einem Düsenhalter der Düse zugeführter Kraftstoff innerhalb des Düsenhauptkörpers bis an eine an einem Düsenende der Düse vorgesehene Kraftstoffaustrittsöffnung des Kraftstoffrohres führbar, über die der Kraftstoff in den Brennraum einbringbar ist.

Über das gegen eine Einströmung von Luft abgedichtete, sich zentral in dem Düsenhauptkörper entlang der Düsenlängsachse erstreckende Kraftstoffrohr kann der Kraftstoff in der Düse ohne eine Vermischung mit Luft in den Brennraum eingebracht werden. Im bestimmungsgemäß in ein Triebwerk eingebauten Zustand der Düsenbaugruppe ist somit das düsenseitige Kraftstoffrohr gegen eine Einströmung von Luft aus einer Verdichterstufe des Triebwerks abgedichtet, insbesondere an einem stromaufliegenden Ende des Düsenhauptkörpers. Es findet somit bei einer Düse einer vorgeschlagenen Düsenbaugruppe innerhalb der Düse keine Vormischung von Kraftstoff und Luft statt. Dies ist insbesondere im Blick auf gasförmig einzudüsenden Kraftstoff und insbesondere leicht entzündlichen Wasserstoff vorteilhaft, da hiermit das Risiko eines Flammenrückschlags oder einer verfrühten Selbstzündung des einzudüsenden Kraftstoffs reduziert werden kann. Eine erstmalige Vermischung des einzudüsenden Kraftstoffs mit Luft erfolgt somit bei einer Düse einer vorgeschlagenen Düsenbaugruppe erst stromab des Düsenendes. Innerhalb der Düse wird der Kraftstoff nicht mit Luft vorgemischt, sodass der Kraftstoff am Düsenende zunächst noch unvermischt austritt und erst stromab des Düsenendes eine Vermischung mit (Verbrennungs- respektive Misch-) Luft erfolgt.

In der erfindungsgemäßen Ausführung umfasst die Düse ein mit der Kraftstoffzuleitung verbundenes Zuleitungsreservoir, dem Kraftstoff aus der Kraftstoffzuleitung zuführbar ist und aus dem Kraftstoff dem Kraftstoffrohr zuführbar ist. Das Zuleitungsreservoir ist somit fluidtechnisch sowohl mit der Kraftstoffzuleitung als auch mit dem Kraftstoffrohr verbunden, sodass über das Zuleitungsreservoir der aus der Kraftstoffzuleitung kommende Kraftstoff in das Kraftstoffrohr strömen kann. Das Zuleitungsreservoir ist dabei als Kavität in dem Düsenhalter oder dem Düsenhauptkörper ausgebildet, beispielsweise als im Querschnitt ringförmige, insbesondere kreisringförmige oder im Querschnitt kreisförmige Kavität. Das Zuleitungsreservoir kann eine möglichst gleichmäßige Einleitung des Kraftstoffs in das Kraftstoffrohr unterstützen, indem eine Einströmung des Kraftstoffs aus dem Zuleitungsreservoir über mehrere spezifisch angeordnete und z.B. gleichmäßig verteilte Durchgangsöffnungen erfolgt.

Dabei ist das Zuleitungsreservoir in einem Bereich der Düse vorgesehen, der durch eine, bezogen auf eine durch das Kraftstoffrohr definierte Strömungsrichtung, entlang der der Kraftstoff innerhalb des Düsenhauptkörpers zu dem Düsenende geführt wird, stromauf liegende Stirnwand berandet. Im bestimmungsgemäß in ein Triebwerk eingebauten Zustand der Düsenbaugruppe ist eine solche Stirnwand dem Brennraum der Brennkammer abgewandt. Das stromauf gelegene Zuleitungsreservoir ist in einem mit dem Düsenhalter verbundenen Kopfbereich des Düsenhauptkörpers ausgebildet. Der aus dem Zuleitungsreservoir in das Kraftstoffrohr eingeleitete Kraftstoff kann somit in dem Kraftstoffrohr über einen vergleichsweise großen Teil (mehr als 60%) der entlang der Düsenlängsachse gemessenen Länge des Düsenhauptkörpers zu der Kraftstoffaustrittsöffnung geführt werden. Hierüber kann gezielt und beispielsweise unter einer Vergleichmäßigung der Kraftstoffströmung der Kraftstoff an das Düsenende geführt werden, gegebenenfalls unter gezielter Verdrallung der Kraftstoffströmung.

Mehrere Durchgangsöffnungen, über die Kraftstoff aus dem Zuleitungsreservoir in das Kraftstoffrohr einströmen kann, sind für eine Einströmung von Kraftstoff in einen ersten Rohrabschnitt des Kraftstoffrohres radial nach innen eingerichtet. Über die Durchgangsöffnungen ist somit eine im Wesentlichen radial nach innen gerichtete Strömung in den ersten Rohrabschnitt des Kraftstoffrohres ermöglicht. Zwischen dem Zuleitungsreservoir und dem Kraftstoffrohr sind somit folglich mehrere durch die eine oder mehrere Durchgangsöffnung bereitgestellte Fluidverbindungen vorgesehen, über die Kraftstoff aus dem Zuleitungsreservoir im Wesentlichen radial nach innen in den ersten Rohrabschnitt und damit in das Kraftstoffrohr einströmen kann.

Die Durchgangsöffnungen können sich hierbei durch eine um die Düsenlängsachse verlaufende und den ersten Rohrabschnitt berandende Innenwand des Kraftstoffrohres erstrecken. In diesem Zusammenhang kann auch vorgesehen sein, dass das Zuleitungsreservoir als sich um den ersten Rohrabschnitt erstreckende Ringkammer ausgebildet ist, sodass aus der Ringkammer über mehrere Durchgangsöffnungen Kraftstoff in den ersten Rohrabschnitt einströmen kann, die in der den ersten Rohrabschnitt berandenden Innenwand vorgesehen sind. Grundsätzlich kann eine Durchgangsöffnung beispielsweise durch ein durchgehendes Loch oder einen durchgehenden Schlitz gebildet sein.

Der Kraftstoff ist über das Kraftstoffrohr bis an die an dem Kraftstoffrohr vorgesehene Kraftstoffaustrittsöffnung geführt und wird ohne eine Vermischung mit Luft in den Brennraum eingebracht. Die mindestens eine Durchgangsöffnung erstreckt sich radial nach innen durch eine um die Düsenlängsachse verlaufende und den ersten Rohrabschnitt berandende Innenwand des Kraftstoffrohres, wobei an der Innenwand mehrere Durchgangsöffnungen vorgesehen sind.

Alternativ zu einer im Wesentlichen radialen Einströmung von Kraftstoff aus dem Zuleitungsreservoir in das Kraftstoffrohr können mehrere Durchgangsöffnungen für eine Einströmung von Kraftstoff im Wesentlichen axialer Richtung in einen ersten Rohrabschnitt des Kraftstoffrohres eingerichtet sein. Hierbei können sich beispielsweise die Durchgangsöffnungen durch eine im Wesentlichen oder genau senkrecht zu der Düsenlängsachse verlaufende und den ersten Rohrabschnitt (stromauf) berandende (begrenzende) Rückwand des Kraftstoffrohres oder durch eine das Zuleitungsreservoir von dem ersten Rohrabschnitt trennende Trennwand erstrecken.

Der Kraftstoff ist über das Kraftstoffrohr bis an die an dem Kraftstoffrohr vorgesehene Kraftstoffaustrittsöffnung geführt und wird ohne eine Vermischung mit Luft in den Brennraum eingebracht. An der Rückwand oder der Trennwand sind mehrere Durchgangsöffnungen vorgesehen.

Unabhängig davon, ob über eine oder mehrere Durchgangsöffnungen eine Einströmung des Kraftstoffs in das Kraftstoffrohr in im Wesentlichen radialer oder in im Wesentlichen axialer Richtung ermöglicht wird, können eine oder mehrere der Durchgangsöffnungen für die Erzeugung einer Kraftstoffströmung in den ersten Rohrabschnitt mit einer Bewegungskomponente in eine Umfangsrichtung um die Düsenlängsachse eingerichtet und vorgesehen sein. Unter einer Kraftstoffströmung mit einer Bewegungskomponente in Umfangsrichtung wird dabei verstanden, dass die in das Kraftstoffrohr eingebrachte Kraftstoffströmung über die Ausbildung und/oder Orientierung der Durchgangsöffnung drallbehaftet erzeugt wird.

Bei Durchgangsöffnungen, die für eine im Wesentlichen radiale Einströmung des Kraftstoffs in den ersten Rohrabschnitt des Kraftstoffrohres vorgesehen sind, kann dies beispielsweise dadurch erreicht werden, dass sich die Durchgangsöffnungen entlang einer Erstreckungsrichtung durch die Innenwand erstrecken, die (in einer Querschnittsansicht senkrecht zur Düsenlängsachse) bezogen auf die Düsenlängsachse schräg oder parallelversetzt zu einer radial zur Düsenlängsachse orientierten Radiallinie verläuft. Durch den damit schrägen Verlauf der Durchgangsöffnung innerhalb der umfangsseitig umlaufenden Innenwand weist eine hierüber in den ersten Rohrabschnitt des Kraftstoffrohres erzeugte Kraftstoffströmung einen Strömungsanteil in Umfangsrichtung und damit Drall auf. Die Durchgangsöffnungen sind mit anderen Worten jeweils nicht radial zur Düsenlängsachse und damit zu einer Mittelachse des Kraftstoffrohres angeordnet, sondern mit Parallelversatz zu den Radiallinien oder gegenüber den Radiallinien innerhalb eines Querschnitts senkrecht zur Düsenlängsachse angewinkelt (wobei sie nicht auf die Düsenlängsachse bzw. einen in der Querschnittsansicht ersichtlichen Mittelpunkt des ersten Rohrabschnitts weisen).

Bei Durchgangsöffnungen, die für eine im Wesentlichen axiale Einströmung von Kraftstoff in den ersten Rohrabschnitt des Kraftstoffrohres vorgesehen sind, können sich die Durchgangsöffnungen wiederum entlang einer Erstreckungsrichtung durch die (stromauf liegende) Rückwand oder die (das Kraftstoffreservoir abtrennende) Trennwand erstrecken, die schräg zur Düsenlängsachse verläuft. Eine Durchgangsöffnung in der Rückwand oder Trennwand verläuft somit nicht parallel zur Düsenlängsachse, sodass eine durch die Durchgangsöffnungen erzeugte Strömung von Kraftstoff in den ersten Rohrabschnitt ebenfalls einen Strömungsanteil in Umfangsrichtung aufweist. Für eine gleichmäßige(re) Einströmung von Kraftstoff über einen Querschnitt des Kraftstoffrohres an dem ersten Rohrabschnitt sind selbstverständlich auch in einer derartigen Ausführungsvariante an der Rückwand oder Trennwand mehrere Durchgangsöffnungen vorgesehen, insbesondere entlang einer oder mehrerer Umfangsrichtung(en) um die Düsenlängsachse gleichmäßig verteilt.

In einer Weiterbildung einer vorgeschlagenen Düsenbaugruppe, bei der über mehrere an einer Innenwand angeordnete Durchgangsöffnungen Kraftstoff in einen ersten Rohrabschnitt des Kraftstoffrohres einströmen kann, ist - für eine Homogenisierung von durch die Durchgangsöffnungen strömenden Teilmassenströmen an Kraftstoff über den Umfang des ersten Rohrabschnitts - vorgesehen, durch das Zuleitungsreservoir zu den Durchgangsöffnungen unterschiedlich große Massenströme an Kraftstoff strömen zu lassen. Ziel ist es hierbei, den Gesamtmassenstrom an Kraftstoff so aufzuteilen, dass durch alle Durchgangsöffnungen derselbe Massenstromanteil am Gesamtmassenstrom in den ersten Rohrabschnitt strömt. Hierfür werden zum Beispiel in Abhängigkeit davon, wie weit die jeweilige Durchgangsöffnung von einer Zuleitungsöffnung entfernt ist, wie viele Durchgangsöffnungen sich zwischen der jeweiligen Durchgangsöffnung und der Zuleitungsöffnung und wie viele Durchgangsöffnungen stromab (vom Kraftstoffreservoir) der jeweiligen Zugangsöffnung noch folgen, über die der Kraftstoff aus der Kraftstoffzuleitung in das Zuleitungsreservoir gelangt, die Geometrien der Durchgangsöffnungen unterschiedlich sein. So können sich beispielsweise wenigstens zwei von mehreren Durchgangsöffnungen hinsichtlich ihrer (entlang einer jeweiligen Erstreckungsrichtung durch die Innenwand gemessenen) Längen und/oder hinsichtlich ihrer Querschnittsflächen voneinander unterscheiden. Unterschiedliche Querschnittsflächen schließen dabei insbesondere ein, dass sich wenigstens zwei von mehreren Durchgangsöffnungen hinsichtlich entlang einer in Umfangsrichtung gemessenen Breite und/oder entlang einer parallel zur Düsenlängsachse verlaufenden Achsrichtung gemessenen Tiefe voneinander unterscheiden. Dies schließt insbesondere ein, dass sich bei einem kreisförmigen Querschnitt der Durchgangsöffnungen diese sich hinsichtlich ihrer Durchmesser voneinander unterscheiden.

Grundsätzlich kann das Zuleitungsreservoir als Ringkammer, insbesondere als Kreisringkammer ausgebildet sein. Das Zuleitungsreservoir kann somit beispielsweise als im Querschnitt ringförmige Kavität ausgebildet sein, die sich für eine im Wesentlichen radiale Kraftstoffeinströmung in das Kraftstoffrohr um den ersten Rohrabschnitt erstreckt oder bei im Wesentlichen axialer Einströmung des Kraftstoffs in das Kraftstoffrohr stromauf des ersten Rohrabschnitts vorgesehen ist.

Ist das Zuleitungsreservoir als Ringkammer ausgebildet, kann für die vorstehend angesprochene Homogenisierung der Teilmassenströme von Kraftstoff über den Umfang der Ringkammer vorgesehen sein, dass sich die Ringkammer im Querschnitt zu einem Abschnitt einer die Ringkammer radial außen berandenden Wand hin verjüngt, der einer Zuleitungsöffnung gegenüber liegt, über die Kraftstoff aus der Kraftstoffzuleitung der Ringkammer zuführbar ist. In einer Querschnittsansicht verringert sich somit ausgehend von der Zuleitungsöffnung eine Breite der Ringkammer zu dem der Zuleitungsöffnung gegenüberliegenden (Wand-) Abschnitt respektive zu einer gegenüberliegenden Seite hin. Die Ringkammer weist somit eine größte Breite im Bereich der Zuleitungsöffnung und eine geringste Breite hierzu gegenüberliegend auf. Grundsätzlich kann eine Ringkammer mit sich über den Umfang in einer Querschnittsansicht verändernder Breite auch mit Düsenaustrittsöffnungen kombiniert sein, die sich hinsichtlich ihrer Länge und/oder hinsichtlich ihrer Querschnittsflächen voneinander unterscheiden und/oder die in der Innenwand des ersten Rohrabschnitts schräg verlaufen, um eine drallbehaftete Kraftstoffströmung in das Kraftstoffrohr zu erzeugen. Die Verjüngung der Ringkammer kann grundsätzlich insbesondere durch eine sich über den Umfang verändernde Wanddicke des innenliegenden ersten Rohrabschnitts - im Bereich des Zuleitungsreservoirs - und/oder eine sich über den Umfang verändernde Wanddicke der die Ringkammer radial außen berandenden Wand verursacht sein. So kann dann beispielsweise die Wanddicke des innenliegenden ersten Rohrabschnitts im Querschnitt zu dem Abschnitt der radial außen berandenden Wand, der der Zuleitungsöffnung gegenüberliegt, hin (radial nach außen) zunehmen und/oder die Wanddicke der Wand kann zu dem Abschnitt, der der Zuleitungsöffnung gegenüberliegt, hin (radial nach innen) zunehmen, um eine sich in der Querschnittsansicht verjüngende Ringkammer bereitzustellen.

Unabhängig davon, ob Durchgangsöffnungen mit unterschiedlichen Querschnittsflächen in Kombination mit einer sich in der Querschnittsansicht verjüngenden Ringkammer kombiniert sind oder nicht, kann vorgesehen sein, dass die Querschnittsflächen mehrerer Durchgangsöffnungen über den Umfang der Ringkammer ausgehend von einer ersten Durchgangsöffnung zu wenigstens einer weiteren Durchgangsöffnung hin zunehmen und mithin größer werden. Die erste Durchgangsöffnung ist hierbei einer Zuleitungsöffnung zugewandt oder zumindest stromab die erste Durchgangsöffnung ab der Zuleitung, über die Kraftstoff aus der Kraftstoffzuleitung der Ringkammer zuführbar ist. Die wenigstens eine weitere Durchgangsöffnung ist wiederum einem Abschnitt einer die Ringkammer radial außen berandenden Wand zugewandt, die sich in einer Querschnittsansicht an der von der Zuleitungsöffnung gesehen am weitesten stromabliegenden Position befindet. In einer Querschnittsansicht werden somit Querschnittsflächen derjenigen Durchgangsöffnungen größer, die im Uhrzeigersinn oder gegen den Uhrzeigersinn auf die erste Durchgangsöffnung folgen. Durch weiter von der Zuleitungsöffnung entfernt liegende Durchgangsöffnungen kann somit der Kraftstoff mit geringerem Druckverlust in den ersten Rohrabschnitt eingebracht werden, sodass über alle Durchgangsöffnungen im Wesentlichen jeweils dieselbe Masse an Kraftstoff je Zeiteinheit in den ersten Rohrabschnitt gelangt, wenn Kraftstoff der Düse zugeführt wird.

Anstelle einer Ausbildung des Zuleitungsreservoirs als Ringkammer sieht eine alternative Ausführungsvariante vor, das Zuleitungsreservoir über einen Hohlkörper auszubilden, der zentral stromauf des ersten Rohrabschnitts angeordnet ist. Aus einem entsprechenden zentralen Hohlraum, zum Beispiel im Kopfbereich des Düsenhauptkörpers, kann dann der Kraftstoff im Wesentlichen axial in den ersten Rohrabschnitt des Kraftstoffrohres einströmen, über mehrere Durchgangsöffnungen, wie vorstehend erläutert. Hierbei können, wie ebenfalls bereits vorstehend angesprochen, eine oder mehrere der Durchgangsöffnungen für die Erzeugung einer Kraftstoffströmung in den ersten Rohrabschnitt mit einer Bewegungskomponente in eine Umfangsrichtung um die Düsenlängsachse eingerichtet und vorgesehen sein. Die Durchgangsöffnungen sind hierfür beispielsweise jeweils nicht axial zur Düsenlängsachse verlaufend angeordnet, sondern angewinkelt. Mittelachsen (insbesondere Bohrungsachsen) der Durchgangsöffnungen verlaufen dann beispielsweise tangential zu einem gedachten Kreis um die Düsenlängsachse.

In einer Ausführungsvariante ist innerhalb des Kraftstoffrohres mindestens ein zentral angeordneter Strömungskörper vorgesehen, an dessen äußerer Mantelfläche dem Kraftstoffrohr zugeführter Kraftstoff entlang strömen kann. Ein solcher zentral angeordneter Strömungskörper kann beispielsweise axial von Kraftstoff umströmt werden und damit der Vergleichmäßigung der Kraftstoffströmung innerhalb des Kraftstoffrohres und/oder der Beeinflussung der Strömungsrichtung des Kraftstoffs an der Kraftstoffaustrittsöffnung dienen.

Grundsätzlich kann sich ein innerhalb des Kraftstoffrohres vorgesehener Strömungskörper mit einem Ende bis zum Düsenende, und dabei insbesondere bis zur Kraftstoffaustrittsöffnung erstrecken. Beispielsweise kann hierbei der Strömungskörper am Düsenende gegenüber einem radial weiter außen liegenden Rand der Kraftstoffaustrittsöffnung axial vorstehen, d.h. über den Rand der Kraftstoffaustrittsöffnung zumindest geringfügig axial hinausragen. Ein Ende des Strömungskörpers kann dabei eine Strömungsrichtung für den in den Brennraum einzudüsenden Kraftstoff vorgeben. Beispielsweise kann der Strömungskörper hierfür an seinem Ende ein Leitelement aufweisen, über das an der Kraftstoffaustrittsöffnung austretender Kraftstoff, bezogen auf die Düsenlängsachse, radial nach außen geleitet wird. Beispielsweise ist am Ende des Strömungskörpers das Leitelement durch eine radiale Aufweitung des Strömungskörpers ausgebildet. Die Kraftstoffeindüsung in den Brennraum mit einem radial nach außen weisenden Strömungsanteil kann hierbei die Eigenschaften, wie Gestalt und Größe, eines Strömungsfeldes einer stromab des Düsenendes entstehenden Rezirkulationszone beeinflussen, die gerade bei gasförmigem Kraftstoff und insbesondere Wasserstoff mit Blick auf eine Flammstabilität und vergleichsweise geringe Verbrennungstemperaturen unmittelbar im Nahfeld der Düse von Vorteil sein kann.

Über eine Verengung am Ende des Kraftstoffrohres an der Kraftstoffaustrittsöffnung, die mit dem dem Brennraum zugewandten Ende des Strömungskörpers realisiert ist, kann ferner eine gezielte Beschleunigung der Kraftstoffströmung in den Brennraum hinein erfolgen.

Grundsätzlich kann der Strömungskörper zapfenförmig oder kegelförmig ausgebildet sein.

Alternativ oder ergänzend ist der Strömungskörper symmetrisch, insbesondere rotationssymmetrisch zur Düsenlängsachse und/oder mit einer dem Brennraum zugewandten stumpfen oder im Wesentlichen planen, zentral angeordneten Stirnseite ausgebildet. Eine stumpf oder im Wesentlichen plane, zentral angeordnete Stirnseite an einem Ende des Strömungskörpers kann beispielsweise die Bildung einer inneren Rezirkulationszone mit vergleichsweise hoher Kraftstoffkonzentration im Betrieb der Brennkammer bzw. des Triebwerks unterstützen. Eine solche innere Rezirkulationszone geht gegebenenfalls mit niedrigen Verbrennungstemperaturen im Nahfeld der Düse und damit unmittelbar stromab des Düsenendes einher.

Grundsätzlich kann der Strömungskörper ein stromauf liegendes und gegebenenfalls aerodynamisch geformtes, konvex gewölbtes Ende aufweisen, das zu einer Stirnwand der Düse oder einer Rückwand des Kraftstoffrohres axial beabstandet ist. Insbesondere in Abhängigkeit von der Ausgestaltung des Zuleitungsreservoirs kann der Strömungskörper aber auch in Ausführungsvarianten der vorgeschlagenen Lösung mit einer Stirnwand der Düse oder einer Rückwand des Kraftstoffrohres verbunden sein. Hierbei erstreckt sich dann der Strömungskörper entlang der Düsenlängsachse von der Stirnwand oder der Rückwand weg und ist somit zu der Stirnwand oder der Rückwand axial nicht beabstandet. Während bei einer axialen Beabstandung des Strömungskörpers der Strömungskörper eine stromauf liegendes und axial mit Kraftstoff angeströmtes Ende innerhalb des Kraftstoffrohres aufweist, ist dies bei einem mit der Stirnwand oder Rückwand verbundenen Strömungskörper nicht der Fall. Je nach Konstruktion und Randbedingungen kann die eine oder die andere Form des Strömungskörpers von Vorteil sein, beispielsweise im Hinblick auf eine in einem Kopfbereich des Düsenhauptkörpers realisierbare Dicke des Düsenhauptkörpers.

In einer Ausführungsvariante können innerhalb des Kraftstoffrohres auch zwei bezogen auf Düsenlängsachse axial zueinander beabstandete Strömungskörper vorhanden sein. In einer derartigen Ausführungsvariante liegt folglich zwischen den zwei Strömungskörpern zentral ein von Kraftstoff über den gesamten Querschnitt durchströmbarer Rohrabschnitt des Kraftstoffrohres vor. Beispielsweise ist ein erster stromauf liegender Strömungskörper zapfenförmig ausgebildet, während ein stromab im Bereich der Kraftstoffaustrittsöffnung vorgesehener weiterer Strömungskörper kegelförmig oder anderweitig aerodynamisch günstig - z.B. halbkugelförmig, kegelförmig (mit stumpfer oder gerundeter Kegelspitze), ogivenförmig oder ovoidförmig - ausgebildet ist.

Die Düse kann ihrem Düsenende einen mit dem Düsenhauptkörper verbundenen Düsenkopf mit wenigstens einem Luftkanal umfassen, über den zur Vermischung mit dem aus der Kraftstoffaustrittsöffnung ausgebrachten Kraftstoff vorgesehene Luft in den Brennraum einbringbar ist. An dem Düsenkopf ist somit wenigstens ein bezüglich des inneren bzw. zentralen Kraftstoffrohres radial außen liegender Luftleitkanal vorgesehen.

Der Luftleitkanal an dem Düsenende kann mindestens eine Luftaustrittsöffnung umfassen, wobei das Kraftstoffrohr mit seiner Kraftstoffaustrittsöffnung gegenüber der mindestens einen Luftaustrittsöffnung des Luftleitkanals, bezogen auf Düsenlängsachse, axial vorsteht. Die Kraftstoffaustrittsöffnung liegt damit in einer durch das Kraftstoffrohr definierten Strömungsrichtung, entlang der der Kraftstoff innerhalb des Düsenhauptkörpers geführt ist, mindestens genauso weit oder weiter stromab als die mindestens eine Luftaustrittsöffnung des Luftleitkanals. Insbesondere kann in diesem Zusammenhang vorgesehen sein, dass die Kraftstoffaustrittsöffnung am weitesten stromab angeordnet ist, also jede Luftaustrittsöffnung bezogen auf Düsenlängsachse axial zu der Kraftstoffaustrittsöffnung des Kraftstoffrohres zurückgesetzt angeordnet ist. Hierüber kann der Kraftstoff somit weiter stromab in den Brennraum eingedüst werden als Luft über den wenigstens einen radial außen liegenden Luftleitkanal. Dies unterstützt, dass die Wärmefreisetzung infolge Verbrennung des sich stromab der Düse einstellenden Gemischs aus Kraftstoff und Luft die Düse nicht in kritischer Weise thermisch belastet.

An dem Düsenkopf können in einer Ausführungsvariante auch wenigstens zwei radial zueinander beabstandete Luftleitkanäle mit jeweils wenigstens einer Luftaustrittsöffnung vorgesehen sein. Über mindestens eine verdrallte Luftströmung aus einem (z.B. wenigstens einer radial äußersten Luftleitkanal) oder beiden von zwei radial zueinander versetzten Luftleitkanälen an dem Düsenkopf kann eine Luftströmung am Düsenende erzeugt werden, die die Kraftstoffströmung umhüllt, radial aufzieht und derart eine Rezirkulationszone erzeugt, in der sich Luft und Kraftstoff mischen und sich eine drallstabilisierte, rezirkulierende Verbrennungszone ausbildet. Dabei sorgt dann über die Luftleitkanäle eingeströmte Luft für eine luftreiche Zone in einem vorderen Bereich der Brennkammer um das Düsenende herum (eine sogenannte äußere Rezirkulationszone). Hierdurch können die Düse und eine die Düse umgebende Brennkammerwand der Brennkammer vor der Verbrennungszone thermisch geschützt werden.

Zur Bereitstellung einer ausreichenden Luftmenge, insbesondere für eine vorstehend erläuterte äußere Rezirkulationszone, über die Düse können wenigstens an einem radial äußersten Luftleitkanal der wenigstens zwei Luftleitkanäle eine oder mehrere radial nach innen weisende Einlauflippen vorgesehen sein, um Luft in den radial äußersten Luftleitkanal (hinein) zu leiten. Die eine oder mehreren Einlauflippen führen somit im bestimmungsgemäß eingebauten Zustand der Düsenbaugruppe beispielsweise auch dazu, dass aus einer Verdichterstufe kommende und um den Düsenhauptkörper geführte Luft radial nach innen in den radial äußersten Luftleitkanal und gegebenenfalls auch in einen radial weiter innen liegenden weiteren Luftleitkanal hinein geführt wird. Die Verwendung von Einlauflippen für einen oder mehrere Luftleitkanäle kann dabei insbesondere für einen Kopfbereich der Düse von Vorteil sein, der vergleichsweise dick baut und der damit unter Umständen zunächst dafür hinderlich ist, eine ausreichend große Luftmenge axial in den oder die Luftleitkanäle einströmen zu lassen.

Für die Bildung einer wirkungsvollen Rezirkulationszone kann ferner von Vorteil sein, wenn die über einen Luftleitkanal in den Brennraum eingebrachte Luftströmung einen Drall aufweist. Beispielsweise sind hierfür wenigstens in einem radial äußersten Luftleitkanal der wenigstens zwei Luftleitkanäle ein oder mehrere Axialverdraller oder Radialverdraller vorgesehen.

Wie bereits eingangs erläutert, eignet sich die vorgeschlagene Lösung insbesondere für die Eindüsung von unterschiedlichen Typen von Kraftstoffen. Gerade aber mit Blick auf die Eindüsung von gasförmigem Kraftstoff und insbesondere von Wasserstoff bietet die vor einer Vermischung mit Luft gestützte zentrale Zuführung des Kraftstoffs über ein düsenseitiges Kraftstoffrohr besondere Vorteile.

Von der vorgeschlagenen Lösung umfasst ist ferner ein Triebwerk mit mindestens einer Ausführungsvariante einer vorgeschlagenen Düsenbaugruppe. Eine vorgeschlagene Düsenbaugruppe kann aber selbstverständlich auch bei einer (stationären) Gasturbine Verwendung finden.

Die beigefügten Figuren veranschaulichen exemplarisch mögliche Ausführungsvarianten der vorgeschlagenen Lösung.

Hierbei zeigen:
- Figur 1: ausschnittsweise und in geschnittener Darstellung eine erste Ausführungsvariante einer Düse einer vorgeschlagenen Düsenbaugruppe mit einem als Ringkammer ausgeführten Zuleitungsreservoir, aus dem im Wesentlichen radial nach innen Kraftstoff in ein zentrales Kraftstoffrohr eines Düsenhauptkörpers einströmen kann;
- Figuren 2A-2C: verschiedene Schnittansichten entlang der Schnittlinie A-A der Figur 1 unter Darstellung unterschiedlicher Anzahlen von Durchgangsöffnungen, über die die Ringkammer mit dem zentralen Kraftstoffrohr fluidtechnisch verbunden ist;
- Figuren 3A-3C: in mit den Figuren 2A bis 2C übereinstimmenden Ansichten mögliche Weiterbildungen für die Erzeugung drallbehafteter Einströmungen von Kraftstoff in das Kraftstoffrohr über schräg verlaufende Durchgangsöffnungen;
- Figur 4: in mit den Figuren 2A bis 2C und 3A bis 3C übereinstimmender Ansicht eine Weiterbildung, bei der die Ringkammer in der Querschnittsansicht mit sich verjüngender Breite ausgeführt ist;
- Figur 5: in mit den Figuren 2A bis 2C, 3A bis 3C und 4 übereinstimmender Ansicht eine weitere Weiterbildung, bei der durchströmte Querschnittsflächen von über den Umfang verteilt angeordneten Durchgangsöffnungen zur Einströmung von Kraftstoff in das Kraftstoffrohr aus der Ringkammer je nach Position einer Durchgangsöffnung am Umfang der Brennkammer verschieden sind;
- Figur 6: in mit der Figur 1 übereinstimmender Ansicht eine weitere Ausführungsvariante, bei der an radial äußeren Luftleitkanälen eines Düsenkopfes der Düse Einlauflippen ausgebildet sind;
- Figur 7A: in mit den Figuren 1 und 6 übereinstimmender Ansicht eine Weiterbildung der Ausführungsvariante der Figur 6, bei der in dem Kraftstoffrohr zwei axial zueinander beabstandete Strömungskörper (anstelle eines zentralen Strömungskörpers) vorgesehen sind;
- Figur 7B: eine Weiterbildung der Ausführungsvariante der Figur 7A, bei der anstelle eines Axialverdrallers in einem axial äußersten Luftleitkanal des Düsenkopfes ein Radialverdraller vorgesehen ist;
- Figur 8: in mit den Figuren 1, 6 und 7A bis 7B übereinstimmender Ansicht eine weitere Ausführungsvariante, bei der anstelle einer einen ersten Rohrabschnitt des Kraftstoffrohres umfangsseitig umgebenden Ringkammer eine axial stromauf des ersten Rohrabschnitts liegende Ringkammer für den zuzuführenden Kraftstoff vorgesehen ist;
- Figur 9: eine Weiterbildung der Ausführungsvariante der Figur 8, bei der ein zentraler Strömungskörper mit einer Rückwand innerhalb des Düsenhauptkörpers verbunden ist, die die stromauf gelegene Ringkammer von dem Kraftstoffrohr trennt;
- Figur 10A: in insbesondere mit der Figur 1 übereinstimmender Ansicht eine weitere Ausführungsvariante, bei der anstelle einer Ringkammer stromauf des Kraftstoffrohres ein zentraler Hohlraum für ein Zuleitungsreservoir ausgebildet ist, aus dem der zuzuführende Kraftstoff über Durchgangsöffnungen in einer Trennwand in im Wesentlichen axialer Richtung in das Kraftstoffrohr einströmen kann;
- Figur 10B: eine einzelne Darstellung der Trennwand entsprechend der Schnittlinie B-B der Figur 10A (ohne Darstellung der angrenzenden Abschnitte der Düse);
- Figur 11A: ein Triebwerk, in dem eine Ausführungsvariante einer vorgeschlagenen Düsenbaugruppe zum Einsatz kommt;
- Figur 11B: ausschnittsweise und in vergrößertem Maßstab die Brennkammer des Triebwerks der Figur 11A.

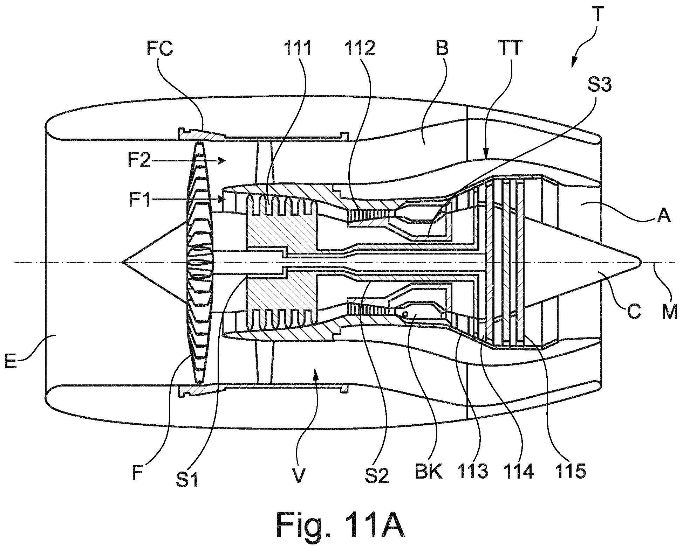

Die Figur 11A veranschaulicht schematisch und in Schnittdarstellung ein (Turbofan-) Triebwerk T, bei dem die einzelnen Triebwerkskomponenten entlang einer Rotationsachse oder Mittelachse M hintereinander angeordnet sind und das Triebwerk T als Turbofan-Triebwerk ausgebildet ist. An einem Einlass oder Intake E des Triebwerks T wird Luft entlang einer Eintrittsrichtung mittels eines Fans F bewegt und verdichtet. Dieser in einem Fangehäuse FC angeordnete Fan F wird über eine Rotorwelle S1 angetrieben, die von einer Turbine TT des Triebwerks T in Drehung versetzt wird. Die Turbine TT schließt sich hierbei an einen Verdichter V an, der beispielsweise einen (optionalen) Mitteldruckverdichter 111 und einen Hochdruckverdichter 112 aufweist, sowie gegebenenfalls noch einen Niederdruckverdichter (Booster). Der Fan F führt einerseits in einem Primärluftstrom F1 dem Verdichter V Luft zu sowie andererseits, zur Erzeugung von Schub, in einem Sekundärluftstrom F2 einem Sekundärstromkanal oder Bypasskanal B. Der Bypasskanal B verläuft hierbei um ein den Verdichter V, die Brennkammerbaugruppe BK und die Turbine TT umfassendes Kerntriebwerk, das einen Primärstromkanal für die durch den Fan F dem Kerntriebwerk zugeführte Luft umfasst. Die über den Verdichter V in den Primärstromkanal geförderte Luft gelangt in eine Brennkammerbaugruppe BK des Kerntriebwerks, in der thermische Energie zum Antreiben der Turbine TT durch Verbrennung von Kraftstoff mit aus dem Verdichter einströmender Luft erzeugt wird. Die Turbine TT weist hierfür eine Hochdruckturbine 113, eine (optionale) Mitteldruckturbine 114 und eine Niederdruckturbine 115 auf. Die Turbine TT treibt dabei die Rotorwellen S1, S2 und S3 und damit den Mittel- und Hochdruckverdichter sowie den Fan F an, um über die in den Bypasskanal B geförderte Luft Schub zu erzeugen. Sowohl die Luft aus dem Bypasskanal B als auch das Abgas-Luft-Gemisch aus dem Primärstromkanal des Kerntriebwerks strömen über einen Auslass A am Ende des Triebwerks T aus und tragen beide zum Gesamtschub des Triebwerks bei. Der Auslass A weist hierbei üblicherweise eine Schubdüse und einen zentral angeordneten Auslasskonus C auf. Verbreitet sind auch Konstruktionen, bei denen vor dem Austritt durch den Auslass A die Luft aus dem Bypasskanal und die abgashaltige Luft aus dem Primärstromkanal zu einem einzigen Luftstrom zusammengeführt werden. Um diese Zusammenführung zu erreichen, werden häufig Blütenmischer verwendet, die innerhalb des Triebwerks noch vor einer gemeinsamen Schubdüse und dem Auslass A angeordnet sind (nicht gezeigt).

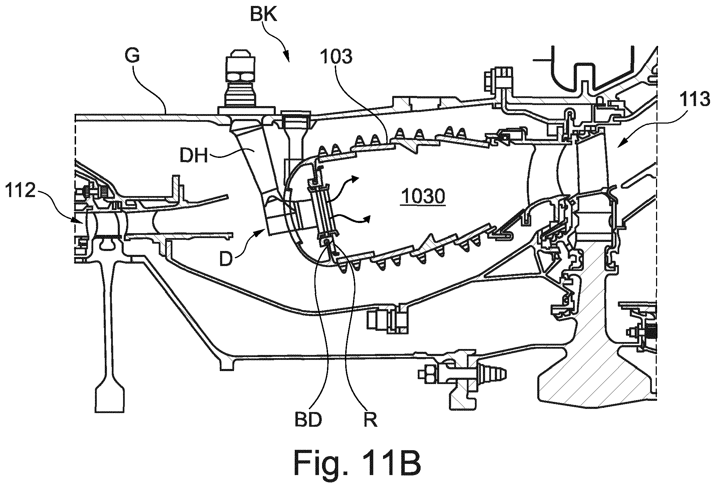

Die Figur 11B zeigt einen Längsschnitt durch die Brennkammerbaugruppe BK des Triebwerks T. Hieraus ist insbesondere in eine (Ring-) Brennkammer 103 des Triebwerks T ersichtlich. Zur Einspritzung von Kraftstoff respektive eines Luft-Kraftstoff-Gemisches in einen Brennraum 1030 der Brennkammer 103 ist eine Düsenbaugruppe vorgesehen. Diese umfasst einen Brennkammerring R, an dem entlang einer Kreislinie um die Mittelachse M mehrere Düsen D an einem Brennkammerkopf der Brennkammer angeordnet sind. An dem Brennkammerring R sind ein oder mehrere Brennerdichtungen BD mit Lageröffnungen vorgesehen, an denen Düsenköpfe der jeweiligen Düsen D gehalten sind, sodass hierüber Kraftstoffstoff in die Brennkammer 103 eingespritzt werden kann. Jede Düse D umfasst dabei einen Flansch, über den ein Düsenhalter DH der Düse D an ein Außengehäuse G der Brennkammerbaugruppe BK geschraubt ist.

Konventionelle Düsen D für ein Triebwerk T sind typischerweise für die Einspritzung flüssigen Kraftstoffs, wie zum Beispiel Kerosin oder Diesel, ausgebildet und weisen hierfür einen zentralen ersten Luftleitkanal auf sowie wenigstens einen weiteren radial außen liegenden zweiten Luftleitkanal und einen Kraftstoffleitkanal, der zwischen den beiden Luftleitkanälen vorgesehen ist. An einer Kraftstoffaustrittsöffnung eines solchen Kraftstoffleitkanals austretender Kraftstoff wird dann bereits an der Düse mit Luft aus dem ersten zentralen Luftleitkanal und gegebenenfalls auch mit der Luft aus dem radial weiter außen liegenden Luftleitkanal vermischt, sodass an einem Düsenende der Düse D ein Kraftstoff-Luft-Gemisch zur Verfügung gestellt wird.

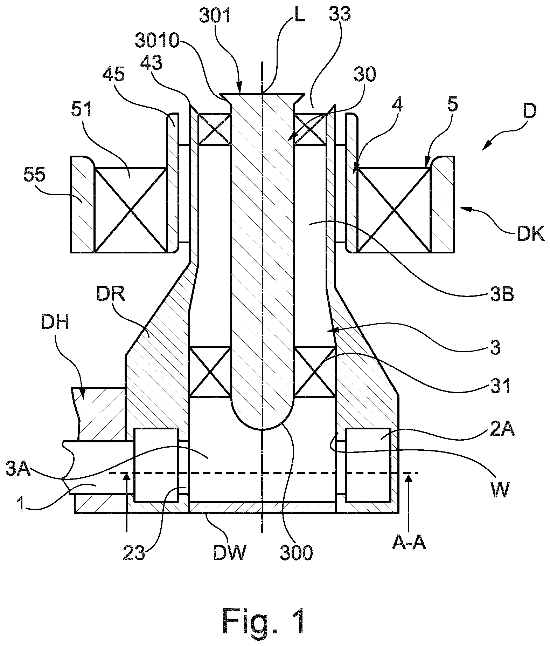

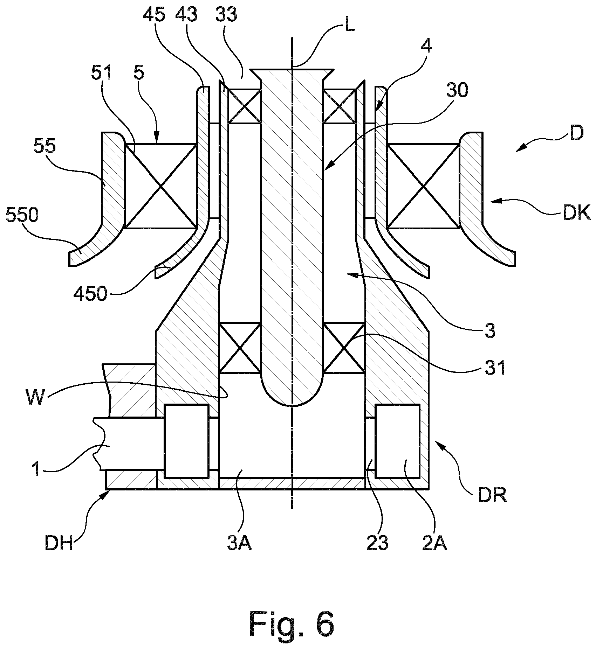

Eine derartige Konfiguration einer Düse D ist insbesondere für gasförmig in einen Brennraum 1030 der Brennkammer 1031 einzudüsenden Kraftstoff, insbesondere Wasserstoff, unter Umständen nachteilig. Hier schafft eine Düsenbaugruppe mit einer Düse D gemäß der vorgeschlagenen Lösung Abhilfe, zu der unterschiedliche Ausführungsvarianten in den Figuren 1 bis 10B veranschaulicht sind.

Hierbei ist jeweils vorgesehen, dass an einem Düsenhauptkörper DR der Düse D ein zentrales, sich entlang einer Düsenlängsachse L erstreckendes und gegen eine Einströmung von Luft abgedichtetes Kraftstoffrohr 3 vorgesehen ist, über das Kraftstoff innerhalb des Düsenhauptkörpers DR bis an eine an einem Düsenende der Düse D vorgesehene Kraftstoffaustrittsöffnung 33 des Kraftstoffrohres 3 führbar ist. Aus der Kraftstoffaustrittsöffnung 33 ist der Kraftstoff dann zur erstmaligen Vermischung mit Luft in den Brennraum 10301 einbringbar.

Bei einer ersten Ausführungsvariante gemäß der Figur 1 wird das zentrale Kraftstoffrohr 3 einer Düse D über ein Zuleitungsreservoir in Form einer Ringkammer 2A mit Kraftstoff versorgt. Diese Ringkammer 2A erstreckt sich an einem Kopfbereich der Düse D, die mit dem Düsenhalter DH verbunden ist, ringförmig um einen ersten Rohrabschnitt 3A des Kraftstoffrohres 3 und wird über eine Kraftstoffzuleitung 1 mit Kraftstoff versorgt, die in dem Düsenhalter DH verläuft. Kraftstoff aus der Kraftstoffzuleitung 1 gelangt somit zunächst über eine Zuleitungsöffnung der Kraftstoffzuleitung 1 in die Ringkammer 2A, von der aus der Kraftstoff weiter in den ersten Rohrabschnitt 3A des Kraftstoffrohres 3 einströmen kann. Der Kraftstoff strömt hierbei aus der Ringkammer 2A über umfangsseitig verteilt an einer Innenwand W des ersten Rohrabschnitts 3A verteilt angeordnete Durchgangsöffnungen 23 im Wesentlichen radial zu der Düsenlängsachse L nach innen in den ersten Rohrabschnitt 3A ein.

Das Kraftstoffrohr 3 ist an der dem Brennraum 1030 abgewandten Stirnseite mit einer durchgängigen Stirnwand DW der Düse D gegenüber aus dem Verdichter V des Triebwerks T kommende Luft abgedichtet. Aus der Kraftstoffzuleitung 1 in das Kraftstoffrohr 3 eingespeister Kraftstoff wird ferner auch innerhalb des Düsenhauptkörpers DR unvermischt zum Düsenende der Düse D gefördert, also ohne dass eine Vermischung mit Luft erfolgt. Der radial aus der Ringkammer 2A in das Kraftstoffrohr 3 eingespeiste Kraftstoff strömt dabei aus dem ersten Rohrabschnitt 3A, der einen Vorraum innerhalb des Kraftstoffrohres 3 definiert, in axialer Richtung in einen zweiten Rohrabschnitt 3B, mit einem innerhalb des Kraftstoffrohres 3 zentral angeordneten Strömungskörper 30. An diesem Strömungskörper 30 entlang strömt der Kraftstoff bis zu der düsenendseitigen Kraftstoffaustrittsöffnung 33 des Kraftstoffrohres 3.

Der zentrale Strömungskörper 30 ist vorliegend zapfenförmig ausgebildet und definiert damit den vorliegend im Querschnitt ringförmigen zweiten Rohrabschnitt 3B (und damit einen sich axial an den ersten Rohrabschnitt 3A anschließenden Ringraum), in dem der Kraftstoff entlang der Düsenlängsachse L zu der Kraftstoffaustrittsöffnung 33 geführt wird. Über den Strömungskörper 30 lässt sich die Kraftstoffströmung über den Querschnitt vergleichmäßigen. Zudem weist der Strömungskörper 30 an einem stromab liegenden Ende 301 einen als Leitelement dienenden Leitkragen 3010 auf, über den die Düsenaustrittsöffnung 33 verengt ist und die austretende Kraftstoffströmung radial nach außen lenkt.

Der derart eingedüste Kraftstoff wird erst stromab der Kraftstoffaustrittsöffnung 33 innerhalb des Brennraums 1030 mit Luft vermischt, die über zwei Luftleitkanäle 4 und 5 an einem Düsenkopf DK der Düse D in den Brennraum 1030 eingebracht wird. Ein erster Luftleitkanal 4 ist dabei als vergleichsweise schmaler Ringspalt radial außen zu dem zentralen Kraftstoffrohr 3 an dem Düsenkopf DK ausgebildet. Radial weiter außen hierzu liegt der weitere Luftleitkanal 5 als radial äußerster Luftleitkanal an dem Düsenkopf DK vor. Luftaustrittsöffnungen der beiden Luftleitkanäle 4, 5 sind dabei gegenüber der Kraftstoffaustrittsöffnung 33 axial zurückgesetzt, sodass das Ende des Kraftstoffrohres 3 und damit die Kraftstoffaustrittsöffnung 33 gegenüber den Luftaustrittsöffnungen der beiden Luftleitkanäle 4 und 5, bezogen auf die durch das Kraftstoffrohr 3 definierte Strömungsrichtung des Kraftstoffs, axial vorsteht. Den ersten Luftleitkanal 4 berandende innere und äußere Wandungen 43 und 45 enden somit weiter stromauf als das Kraftstoffrohr 3. Gleiches gilt für eine radial weiter außen liegende äußerste Wandung 55 für den weiteren, radial äußersten Luftleitkanal 5.

In dem radial äußersten Luftleitkanal 5, der gegenüber dem ersten Luftleitkanal 4 eine um ein Vielfaches größere Kanalbreite aufweist, sind in der Ausführungsvariante der Figur 1 Drallelemente in Form von axialen Luftverdrallern 51 vorgesehen. Hierüber wird eine äußere drallbehaftete Luftströmung erzeugt.

Ebenso kann über axiale Kraftstoffverdraller 31 innerhalb des zweiten Rohrabschnitts 3B des Kraftstoffrohres 3 eine verdrallte Kraftstoffströmung erzeugt werden, die an der Kraftstoffaustrittsöffnung 33 in den Brennraum 1030 gelangt. Aus der Ringkammer 2A über die Durchgangsöffnungen 23 in der Innenwand W im Wesentlichen radial in das Kraftstoffrohr 3 und hier dessen ersten Rohrabschnitt 3A einströmender Kraftstoff wird bei der Ausführungsvariante der Figur 1 folglich zunächst in Richtung eines zu der Stirnwand DW beabstandeten stromauf liegenden Endes 300 des zapfenförmigen Strömungskörpers 30 weiter strömen und dann radial an dem Strömungskörper 30 vorbei in den zweiten Rohrabschnitt 3B des Kraftstoffrohres 3 mit den Kraftstoffverdrallern 31 geführt. Die an dem Strömungskörper 30 über einen Großteil der entlang der Düsenlängsachse L gemessenen Länge des Düsenhauptkörpers DR geführte Kraftstoffströmung bleibt dabei bis zum Austritt an der Kraftstoffaustrittsöffnung 33 unvermischt und trifft erst stromab der Düse D auf die Luftströmungen aus den beiden radial weiter außen liegenden Luftleitkanälen 4 und 5.

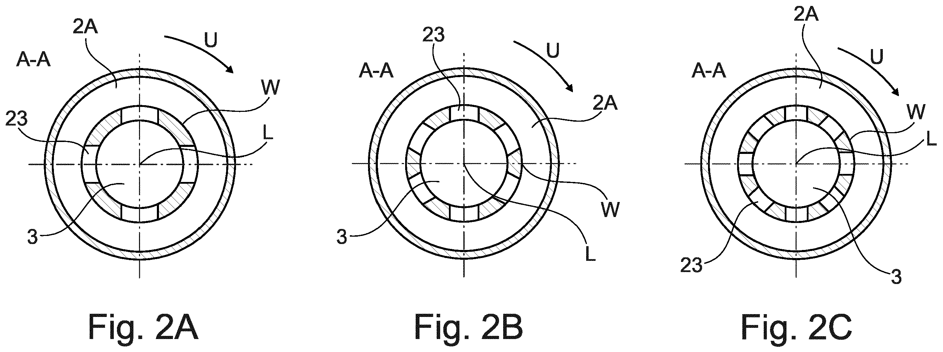

Die zentrale abgedichtete Führung des Kraftstoffs in dem Kraftstoffrohr 3 ist dabei insbesondere für leicht entzündlichen Wasserstoff von Vorteil, um Flammrückschläge und eine vorzeitige Selbstentzündung in einem Nahfeld der Düse zu vermeiden. Die über die Luftleitkanäle 4 und 5 bereitgestellte Luftströmungen stellen ferner in dem Brennraum 1030 eine vorteilhafte Rezirkulationszone stromab der Düse D sicher. Die hierfür vorgeschlagene Zuführung des Kraftstoffs in das abgedichtete, zentrale Kraftstoffrohr 3 ist für eine erste mögliche Ausführungsvariante anhand der Schnittdarstellung der Figuren 2A bis 2C näher veranschaulicht.

Die Figuren 2A, 2B und 2C zeigen dabei jeweils eine Schnittansicht entsprechend der Schnittlinie A-A der Figur 1. Hierüber ist insbesondere ein Querschnitt durch die Ringkammer 2A, das Kraftstoffrohr 3 im Bereich des ersten Rohrabschnitts 3A und die die Ringkammer 2A von dem Inneren des Kraftstoffrohrs 3 trennende Innenwand W ersichtlich. Ferner sind aus der Schnittdarstellung die über den Umfang der Innenwand W gleichmäßig verteilten Durchgangsöffnungen 23 ersichtlich.

Die Figuren 2A, 2B und 2C veranschaulichen hierbei exemplarisch, dass unterschiedliche Anzahlen von Durchgangsöffnungen 23 über den Umfang verteilt vorgesehen werden können, um Kraftstoff aus der Ringkammer 2A möglichst gleichmäßig in das Kraftstoffrohr 3 einströmen zu lassen. So sind in der Darstellung der Figur 2A vier Durchgangsöffnungen 23 vorgesehen, die mit ihren Mittelachsen jeweils um 90° zueinander versetzt sind. Bei der Ausführungsvariante der Figur 2B sind demgegenüber sechs Durchgangsöffnungen 23 vorgesehen, deren Mittelachsen jeweils um 60° zueinander versetzt sind. Die Ausführungsvariante der Figur 2C sieht wiederum acht über den Umfang verteilte Durchgangsöffnungen 23 vor, deren Mittelachsen um jeweils 45° zueinander versetzt sind.

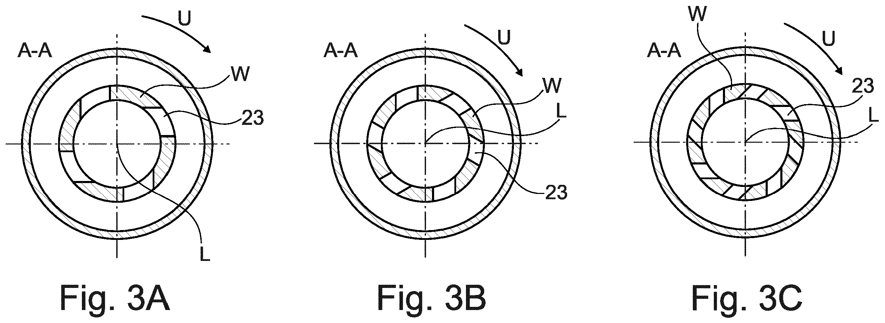

Bei den Ausführungsvarianten der Figuren 2A bis 2C verlaufen die Mittelachsen der Durchgangsöffnungen 23 jeweils radial zu der Düsenlängsachse L und damit entlang von Radiallinien bezüglich der Düsenlängsachse L, sodass Kraftstoff im Wesentlichen nur radial bezüglich der Düsenlängsachse L in das Kraftstoffrohr 3 aus der Ringkammer 2A einströmen kann. Es ist aber selbstverständlich auch möglich, bereits mit der Einströmung des Kraftstoffs in das Kraftstoffrohr 3 der jeweiligen Einströmung einen Strömungsanteil in Umfangsrichtung U mitzugeben, sodass bereits in dem ersten Rohrabschnitt 3A eine drallbehaftete Kraftstoffströmung in dem Kraftstoffrohr 3 entsteht. Hierfür kann entsprechend den möglichen Weiterbildungen der Figuren 3A, 3B und 3C beispielsweise vorgesehen sein, dass die Mittelachse der Durchgangsöffnungen 23 geneigt oder parallelverschoben (in der Variante gezeigt in Figuren 3A bis 3C) zur jeweiligen Radiallinie (bezüglich der Düsenlängsachse L) verlaufen. Eine Durchgangsöffnung 23 weist somit eine schräge Erstreckung durch die Innenwand W auf. Eine durch die jeweilige Durchgangsöffnung 23 geführte Strömung an Kraftstoff weist somit beim Eintritt in das Kraftstoffrohr 3 zusätzlich einen Strömungsanteil in Umfangsrichtung U und damit einen Drall auf. Gegebenenfalls kann hierdurch eine Verdrallung über Kraftstoffverdraller 31 innerhalb des Kraftstoffrohres 3 obsolet werden.

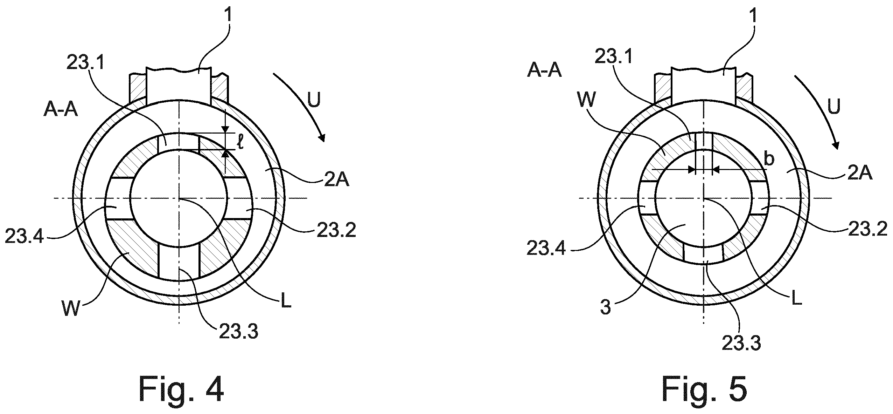

Bei den Ausführungsvarianten der Figuren 4 und 5 ist ferner eine (stärkere) Homogenisierung der Teilmassenströme des Kraftstoffs von der Ringkammer 2A in das Kraftstoffrohr 3 durch weitere Maßnahmen unterstützt.

So sieht die Ausführungsvariante der Figur 4 - exemplarisch für vier über den Umfang verteilte Durchgangsöffnungen 23.1 bis 23.4, vor, dass die Brennkammer 2A mit sich über den Umfang verändernder Spaltbreite ausgeführt ist. Hierfür wird beispielsweise die Innenwand W in ihrer Wanddicke über den Umfang variiert. Hierbei wird erreicht, dass sich die Ringkammer 2A im Querschnitt zu einem Abschnitt einer die Ringkammer 2A radial außen berandenden Wandung hin verjüngt, der einer Zuleitungsöffnung gegenüberliegt, über die Kraftstoff aus der Kraftstoffzuleitung 1 der Ringkammer 2A zuführbar ist. Derselbe Effekt kann erreicht werden, indem sich die Außenwand in ihrer Wanddicke variiert und in Richtung der Innenwand W radial nach innen verdickt. Selbstverständlich ist auch eine Kombination aus sich verjüngender Außen- und Innenwand denkbar.

So ist dann beispielsweise die Ringkammer 2A im Bereich einer ersten Durchgangsöffnung 23.1, die der Zuleitungsöffnung für die Kraftstoffzuleitung 1 gegenüberliegt, in einem Bereich mit maximaler Spaltbreite der Ringkammer 2A vorgesehen. In der dargestellten Querschnittsansicht der Figur 4 nimmt dann im Uhrzeigersinn und entgegen dem Uhrzeigersinn in Richtung weiterer Durchgangsöffnungen 23.2 respektive 23.4 die Spaltbreite der Ringkammer 2A ab, bis zu einer minimalen Spaltbreite im Bereich einer Durchgangsöffnung 23.3. Diese Durchgangsöffnung 23.3 ist gerade demjenigen Abschnitt der die Ringkammer 2A radial außen berandenden Wand zugewandt, der der Zuleitungsöffnung gegenüberliegt. Durch die sich verjüngende Ringkammer 2A und die hierfür vorliegend gewählte Erhöhung der Wanddicke der Innenwand W variieren auch Längen I der Durchgangsöffnungen 23.1-23.4, mit denen sich die Durchgangsöffnung 23.1-23.4 durch die Innenwand W radial nach innen erstrecken.

Bei der Variante der Figur 5 sind über den Umfang der Innenwand W die durchströmten Querschnittsfläche der Durchgangsöffnungen 23.1-23.4 in Abhängigkeit davon variiert, wie weit die jeweilige Durchgangsöffnung 23.1-3.4 von der Zuleitungsöffnung für die Kraftstoffzuleitung 1 entfernt ist. So weist eine erste der Kraftstoffzuleitung 1 unmittelbar gegenüberliegende Durchgangsöffnung 23.1 eine in Umfangsrichtung U gemessene geringste Breite b und damit die geringste durchströmte Querschnittsfläche auf. Die unmittelbar gegenüberliegende Durchgangsöffnung 23.2 weist demgegenüber die größte Breite und damit die größte durchströmte Querschnittsfläche auf. Sind die Durchgangsöffnungen 23.1-23.4 mit kreisförmigem Querschnitt ausgeführt, entspricht die in der Querschnittsansicht der Figur 5 ersichtliche Breite b einem Durchmesser der jeweiligen Durchgangsöffnung 23.1-23.4.

Grundsätzlich können die Durchgangsöffnungen 23 und 23.1-23.4 als Löcher oder Schlitze an der Innenwand W ausgeführt sein.

Um die Zuführung von Luft in die Luftkanäle 4 und 5 am Düsenkopf DK der Düse D zu unterstützen, sieht eine mögliche Weiterbildung gemäß der Figur 5 vor, dass an der äußeren Wandung 45 und der äußersten Wandung 55 stromauf Einlauflippen 450 und 550 ausgebildet sind. Über diese Einlauflippen 450 und 550 wird Luft aus dem Verdichter V, die an dem Düsenhauptkörper DR vorbeiströmt, gezielt radial nach innen in die Luftleitkanäle 4 und 5 hinein geleitet. Hiermit kann insbesondere einer eventuellen nachteiligen Anströmung der Luftleitkanäle 4 und 5 durch einen vergleichsweise dicken Kopfbereich des Düsenhauptkörpers DR effektiv entgegengewirkt werden, sodass dennoch eine ausreichend große Luftmenge in die Luftleitkanäle 4 und 5 gelangt.

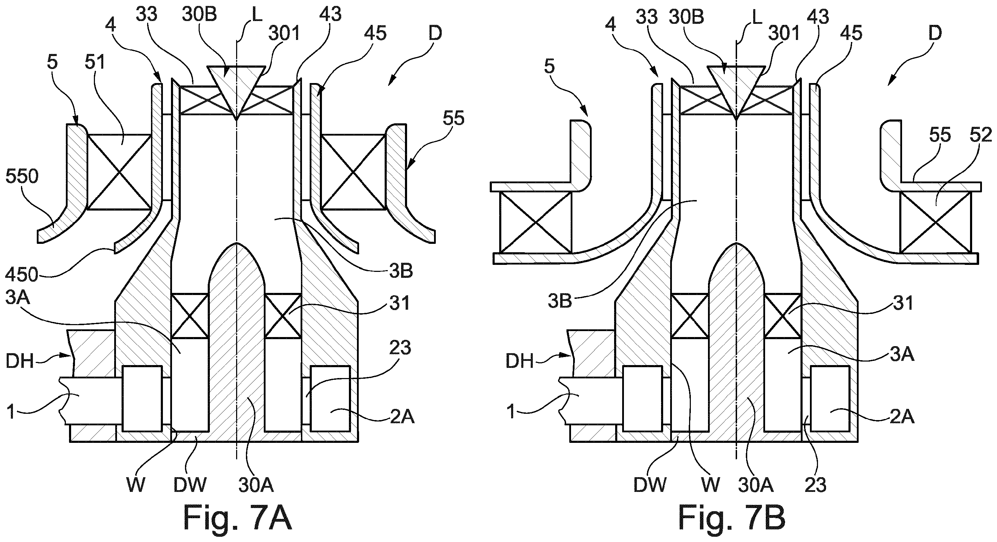

Bei einer alternativen Ausführungsvariante gemäß der Figur 7A sind innerhalb des Kraftstoffrohres 3 zwei axial zueinander versetzte Strömungskörper 30A und 30B vorgesehen. Der eine (erste) stromauf liegende, zapfenförmige Strömungskörper 30A ist dabei bis an die Stirnwand DW geführt und mit dieser verbunden. Der erste Rohrabschnitt 3A, in den Kraftstoff aus der Ringkammer 2A gelangt, umgibt somit den ersten Strömungskörper 30A im Querschnitt ringförmig und ist damit hier als Ringraum ausgebildet. In Richtung des Endes des zapfenförmigen axial erstreckten Strömungskörpers 3A sind in der Ausführungsvariante der Figur 7A Kraftstoffverdraller 31 vorgesehen (die gegebenenfalls durch entsprechende Gestaltung der Durchgangsöffnungen 23 gemäß den Figuren 3A bis 3C auch entfallen können).

Aus dem Ringraum des ersten Rohrabschnitts 3A strömt der Kraftstoff bei der Ausführungsvariante der Figur 7A weiter durch einen zweiten Rohrabschnitt 3B in Richtung der Kraftstoffaustrittsöffnung 33, der als im Querschnitt kreisförmiger Strömungsraum ausgebildet ist. Erst gegen Ende des Kraftstoffrohres 3 trifft der Kraftstoff auf den weiteren (zweiten) stromab gelegenen Strömungskörper 30B, der hier kegelförmig ausgebildet ist (mit der Kegelspitze zu dem ersten, stromauf gelegenen Strömungskörper 30A weisend). Über die entsprechende, sich radial aufweitende Form des kegelförmigen Strömungskörpers 30B zu dessen Ende 301 hin, wird die Kraftstoffaustrittsöffnung 33 des Kraftstoffrohres 3 verengt und zudem radial nach außen geleitet. Eine stumpfe oder im Wesentlichen plane Stirnseite des kegelförmigen zweiten Strömungskörpers 30B ist auch hier wieder dem Brennraum 1030 zugewandt.

Bei einer Weiterbildung gemäß der Figur 7B ist die Düse D der Figur 7A alternativ zu Axialverdrallern 51 in dem radial äußersten (zweiten) Luftleitkanal 5 mit Radialverdrallern versehen. Hier wird folglich von radial weiter außen aus dem Verdichter V kommende Luft in den radial äußersten zweiten Luftleitkanal 5 hinein geleitet und über die Radialverdraller 52 entsprechend verteilt.

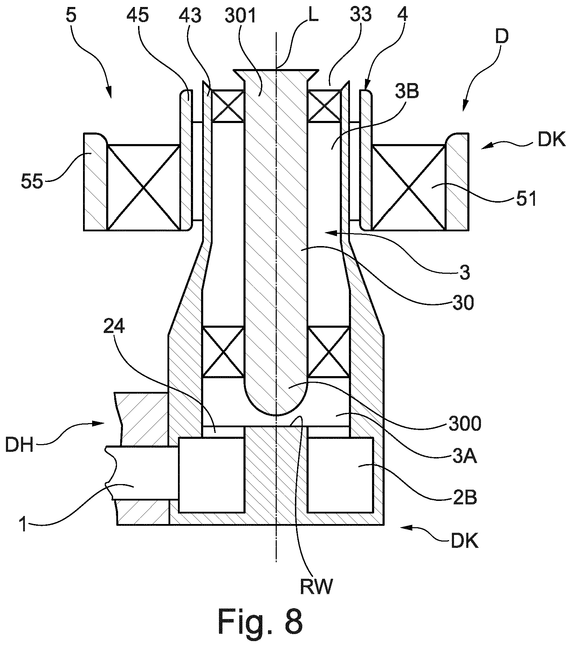

Bei der in der Figur 8 dargestellten Ausführungsvariante einer Düse D einer vorgeschlagenen Düsenbaugruppe ist das Zuleitungsreservoir, in das aus der Kraftstoffzuleitung 1 kommender Kraftstoff eingespeist wird, erneut als Ringkammer 2B ausgebildet. Im Unterschied zu den Ausführungsvarianten der Figuren 1 bis 7B ist hierbei die Ringkammer 2B jedoch stromauf des Kraftstoffrohres 3 angeordnet. Die Ringkammer 2B der Figur 8 erstreckt sich somit nicht umfangsseitig um einen ersten Rohrabschnitt 3A des Kraftstoffrohres 3 herum, sondern ist hierzu axial beabstandet. Die Anordnung der Brennkammer 2B stromauf des Kraftstoffrohres 3 kann gegenüber der einer Ausführungsvariante der Figuren 1 bis 6 den Vorteil aufweisen, dass der Düsenhauptkörper DR gerade im Kopfbereich, in dem der Düsenhauptkörper DR mit dem Düsenhalter DH verbunden ist, schlanker und mithin weniger dick ausgeführt werden muss. Die gegebenenfalls größere Länge der Düse D, gemessen entlang der Düsenlängsachse L, kann hierfür in Kauf genommen werden.

Aus der Ringkammer 2B strömt der Kraftstoff im Betrieb des Triebwerks T somit im Wesentlichen axial durch Durchgangsöffnungen 24 in einer das Kraftstoffrohr 3 stromauf berandenden Rückwand RW in den ersten Rohrabschnitt 3A des Kraftstoffrohres 3 ein. Die Durchgangsöffnungen 24 können hierbei in der die Ringkammer 2B von dem ersten Rohrabschnitt 3A trennenden Rückwand RW um die Düsenlängsachse L gleichmäßig verteilt sein. Die Durchgangsöffnungen 24 können sich zu dem sowohl genau axial durch die Rückwand RW erstrecken. Alternativ ist selbstverständlich auch hier eine Weiterbildung denkbar, bei der die Durchgangsöffnungen 24 schräg zur Düsenlängsachse L verlaufen, sodass die durch die Durchgangsöffnungen 24 geführte Strömung an Kraftstoff bei Eintritt in das Kraftstoffrohr 3 einen Strömungsanteil in Umfangsrichtung U aufweist. Insbesondere können im letzteren Fall alle in der Rückwand RW ausgebildeten Durchgangsöffnungen 24 in demselben Winkel zur Düsenlängsachse L schräg verlaufen, wobei vorliegend die Richtungen der entsprechenden Schrägachsen für die gewünschte Drallerzeugung jeweils tangential zu einem durch die Mitten der Durchgangsöffnungen 24 gedacht verlaufenden Kreisbogen ausgerichtet sind.

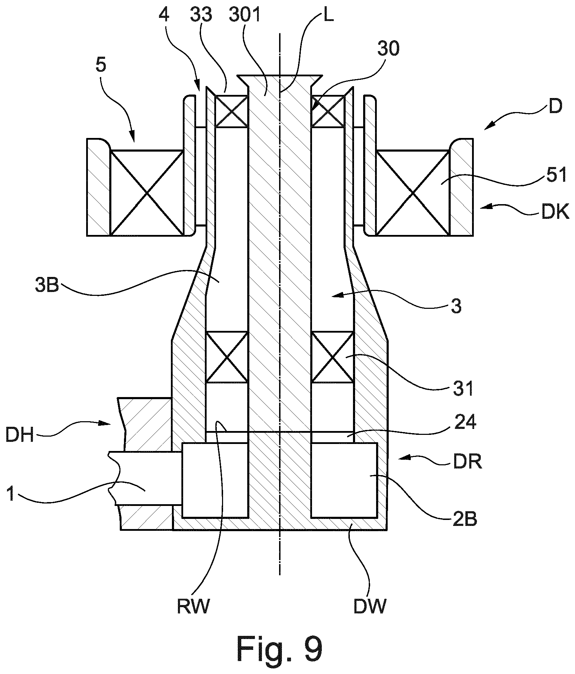

Wie anhand der Weiterbildung der Figur 9 veranschaulicht ist, bietet eine Ausführungsvariante mit stromauf des Kraftstoffrohres 3 angeordnetem Zuleitungsreservoir in Form der Ringkammer 2B zudem die Möglichkeit, einen einzelnen zentralen Strömungskörper 30 (oder einen ersten stromauf liegenden Strömungskörper 30A entsprechend der Figuren 7A und 7B) mit der Rückwand RW und damit insbesondere mit demjenigen (Naben-) Abschnitt des Düsenhauptkörpers DR zu verbinden, um den sich die Ringkammer 2B erstreckt und der mit der Stirnwand DW der Düse D verbunden ist. Kraftstoff aus der Ringkammer 2B strömt somit im Wesentlichen axial entlang der Düsenlängsachse L bereits in einen sich um diesen Strömungskörper 30A ringförmig erstreckenden Ringraum 3B des Kraftstoffrohres 3 ein.

Sowohl bei der Ausführungsvariante der Figuren 8 und 9 können die Durchgangsöffnungen 24 in der Rückwand RW ebenfalls zum Beispiel als Löcher oder Schlitze ausgebildet sein und/oder hinsichtlich ihrer Querschnittsflächen zueinander verschieden sein.

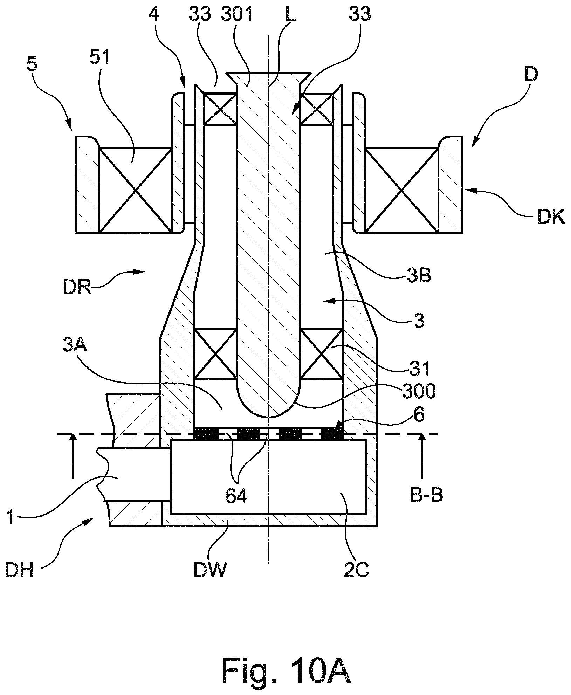

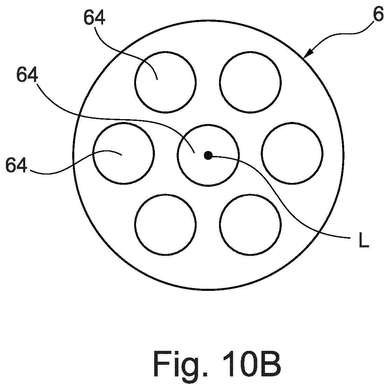

Bei der Ausführungsvariante der Figuren 10A und 10B ist das Zuleitungsreservoir für den aus der Kraftstoffzuleitung 1 kommenden Kraftstoff im Kopfbereich des Düsenhauptkörpers DR als Kraftstoffkammer 2C ausgeführt, die durch einen Hohlraum in dem Kopfbereich ausgebildet ist. Vorliegend ist die Kraftstoffkammer 2C im Querschnitt kreisförmig ausgeführt. Aus dieser Kraftstoffkammer 2C strömt der Kraftstoff im Betrieb des Triebwerks T im Wesentlichen in axialer Richtung in das gegen eine Einströmung von Luft abgedichtete Kraftstoffrohr 3 ein. Hierfür sind das Kraftstoffrohr 3 und die Kraftstoffkammer 2C durch eine Trennwand 6 voneinander räumliche separiert, die mehrere Durchgangsöffnungen 64 für die Einströmung des Kraftstoffs aus der Kraftstoffkammer 2C in das Kraftstoffrohr 3 aufweist. Ein stromauf gelegenes Ende 300 eines zentral innerhalb des Kraftstoffrohres 3 angeordneten, zapfenförmigen Strömungskörper 30 ist hierbei axial zur der Trennwand 6 beabstandet dargestellt, könnte aber auch hiermit verbunden sein.

Grundsätzlich ist vorliegend, z.B. in den Figuren 1, 6, 8, 10A und 10B ein stromauf liegendes Ende 300 des Strömungskörpers 30 halbkugelförmig dargestellt. Dies ist aber selbstverständlich nicht zwingend. Andere geometrische Formen ist ebenfalls denkbar, z.B. eine kegelförmige, ogivenförmige oder ovoidförmige Form.

An der vorliegend kreisscheibenförmigen Trennwand 6 sind die Durchgangsöffnungen 64 regelmäßig verteilt angeordnet, wie beispielsweise die Schnittansicht der Figur 10B illustriert. So sind mehrere Durchgangsöffnungen 64 über den Umfang um die Düsenlängsachse L gleichmäßig verteilt. Zudem ist eine zentrale Durchgangsöffnung 64 mittig an der Trennwand 6 vorgesehen, sodass eine Mittelachse der zentralen, hier jeweils kreisförmigen Durchgangsöffnung 64 koaxial zur Düsenlängsachse 11 verläuft. Über die Trennwand 6 mit den gleichmäßig verteilten Durchgangsöffnungen 64 ist somit eine möglichst homogene Einleitung des Kraftstoffs in das Kraftstoffrohr 3 erreichbar.

In der Darstellung der Figur 10B sind die Durchgangsöffnungen 64 mit identischen Querschnittsflächen ausgebildet. Auch hier gilt jedoch, dass selbstverständlich die Querschnittsflächen der Durchgangsöffnungen 64 zueinander verschieden sein können. Ebenso ist erneut eine Ausbildung als Schlitze möglich wie auch eine Erstreckung geneigt zur Düsenlängsachse L, um bereits beim Eintritt in das Kraftstoffrohr 3 eine drallbehaftete Kraftstoffströmung zu erzeugen.

Es versteht sich, dass die vorgeschlagene Lösung nicht auf die oben beschriebenen Ausführungsbeispiele beschränkt ist und verschiedene Modifikationen und Verbesserungen vorgenommen werden können, ohne von den hier beschriebenen Konzepten abzuweichen. Beliebige der Merkmale können separat oder in Kombination mit beliebigen anderen Merkmalen eingesetzt werden, sofern sie sich nicht gegenseitig ausschließen, und die Offenbarung erstreckt sich auf alle Kombinationen und Unterkombinationen eines oder mehrerer Merkmale, die hier beschrieben werden, und umfasst diese.

### Bezugszeichenliste

- 1: Kraftstoffzuleitung
- 103: Brennkammer
- 1030: Brennraum
- 111: Niederdruckverdichter
- 112: Hochdruckverdichter
- 113: Hochdruckturbine
- 114: Mitteldruckturbine
- 115: Niederdruckturbine
- 23, 23.1-23.4: Durchgangsöffnung
- 24: Durchgangsöffnung
- 2A, 2B: Ringkammer (Zuleitungsreservoir)
- 2C: Kraftstoffkammer (Zuleitungsreservoir)
- 3: Kraftstoffrohr
- 30, 30A, 30B: Strömungskörper
- 300, 301: Ende
- 3010: Leitkragen (Leitelement)
- 31: Kraftstoffverdraller (Drallelement)
- 33: Kraftstoffaustrittsöffnung
- 3A: Vorraum / Ringraum (1. Rohrabschnitt)
- 3B: Ringraum / Strömungsraum (2. Rohrabschnitt)
- 4: Erster Luftleitkanal / Ringspalt
- 43: Innere Wandung
- 45: Äußere Wandung
- 450: Einlauflippe
- 5: Zweiter Luftleitkanal
- 51: Luftverdraller (Drallelement)
- 52: Luftverdraller (Drallelement)
- 55: Äußerste Wandung
- 550: Einlauflippe
- 6: Trennwand
- 64: Durchgangsöffnung
- A: Auslass
- B: Bypasskanal
- b: Breite
- BK: Brennkammerbaugruppe
- BR: Brennerdichtung
- C: Auslasskonus
- D: Düse
- DH: Düsenhalter
- DK: Düsenkopf
- DR: Düsenhauptkörper
- DW: Stirnwand
- E: Einlass / Intake
- F: Fan
- F1, F2: Fluidstrom
- FC: Fangehäuse
- G: Außengehäuse
- L: Düsenlängsachse
- I: Länge
- M: Mittelachse / Rotationsachse
- R: Brennkammerring
- RW: Rückwand
- S: Rotorwelle
- T: (Turbofan-)Triebwerk
- TT: Turbine
- U: Umfangsrichtung
- V: Verdichter
- W: Innenwand

## Patentansprüche

1. Düsenbaugruppe für eine Brennkammer (103) eines Triebwerks (T), mit wenigstens einer Düse (D) zum Eindüsen von Kraftstoff in einen Brennraum (1030) der Brennkammer (103), wobei die Düse (D) einen sich entlang einer Düsenlängsachse (L) erstreckenden Düsenhauptkörper (DR) und einen mit dem Düsenhauptkörper (DR) verbundenen und mindestens eine Kraftstoffzuleitung (1) aufweisenden Düsenhalter (DH) umfasst, wobei
- der Düsenhauptkörper (DR) ein zentrales, sich entlang der Düsenlängsachse (L) erstreckendes und gegen eine Einströmung von Luft abgedichtetes Kraftstoffrohr (3) umfasst, in dem über die mindestens eine Kraftstoffzuleitung (1) zugeführter Kraftstoff innerhalb des Düsenhauptkörpers (DR) bis an eine an einem Düsenende der Düse (D) vorgesehene Kraftstoffaustrittsöffnung (33) des Kraftstoffrohres (3) führbar ist, über die der Kraftstoff in den Brennraum (1030) einbringbar ist,
- die Düse (D) ein mit der Kraftstoffzuleitung (1) verbundenes Zuleitungsreservoir (2A, 2B, 2C) umfasst, dem Kraftstoff aus der Kraftstoffzuleitung (1) zuführbar ist und aus dem Kraftstoff dem Kraftstoffrohr (3) zuführbar ist,
- das Zuleitungsreservoir (2A, 2B, 2C) in einem Bereich der Düse (D) vorgesehen ist, der durch eine, bezogen auf eine durch das Kraftstoffrohr (3) definierte Strömungsrichtung, entlang der der Kraftstoff innerhalb des Düsenhauptkörpers (DR) zu dem Düsenende geführt wird, stromauf liegende Stirnwand (DW) der Düse (D) berandet ist,
- das Zuleitungsreservoir (2A, 2B, 2C) in einem mit dem Düsenhalter (DH) verbundenen Kopfbereich des Düsenhauptkörpers ausgebildet ist,
(DR)
- mindestens eine Durchgangsöffnung (23, 23.1-23.4; 24; 64) vorgesehen ist, über die Kraftstoff aus dem Zuleitungsreservoir (2A, 2B, 2C) in das Kraftstoffrohr (3) einströmen kann,
- die mindestens eine Durchgangsöffnung (23, 23.1-23.4) für eine Einströmung von Kraftstoff aus dem Zuleitungsreservoir (2A), bezogen auf die Düsenlängsachse (L), im Wesentlichen radial nach innen in einen ersten Rohrabschnitt (3A) des Kraftstoffrohres (3) eingerichtet ist und
**dadurch gekennzeichnet, dass** der Kraftstoff über das Kraftstoffrohr (3) bis an die an dem Kraftstoffrohr (3) vorgesehene Kraftstoffaustrittsöffnung (33) geführt ist und ohne eine Vermischung mit Luft in den Brennraum (1030) eingebracht wird, dass sich die mindestens eine Durchgangsöffnung (23, 23.1-23.4) radial nach innen durch eine um die Düsenlängsachse (L) verlaufende und den ersten Rohrabschnitt (3A) berandende Innenwand (W) des Kraftstoffrohres (3) erstreckt und dass an der Innenwand (W) mehrere Durchgangsöffnungen (23, 23.1-23.4) vorgesehen sind.

2. Düsenbaugruppe für eine Brennkammer (103) eines Triebwerks (T), mit wenigstens einer Düse (D) zum Eindüsen von Kraftstoff in einen Brennraum (1030) der Brennkammer (103), wobei die Düse (D) einen sich entlang einer Düsenlängsachse (L) erstreckenden Düsenhauptkörper (DR) und einen mit dem Düsenhauptkörper (DR) verbundenen und mindestens eine Kraftstoffzuleitung (1) aufweisenden Düsenhalter (DH) umfasst, wobei
- der Düsenhauptkörper (DR) ein zentrales, sich entlang der Düsenlängsachse (L) erstreckendes und gegen eine Einströmung von Luft abgedichtetes Kraftstoffrohr (3) umfasst, in dem über die mindestens eine Kraftstoffzuleitung (1) zugeführter Kraftstoff innerhalb des Düsenhauptkörpers (DR) bis an eine an einem Düsenende der Düse (D) vorgesehene Kraftstoffaustrittsöffnung (33) des Kraftstoffrohres (3) führbar ist, über die der Kraftstoff in den Brennraum (1030) einbringbar ist,
- die Düse (D) ein mit der Kraftstoffzuleitung (1) verbundenes Zuleitungsreservoir (2A, 2B, 2C) umfasst, dem Kraftstoff aus der Kraftstoffzuleitung (1) zuführbar ist und aus dem Kraftstoff dem Kraftstoffrohr (3) zuführbar ist,
- das Zuleitungsreservoir (2A, 2B, 2C) in einem Bereich der Düse (D) vorgesehen ist, der durch eine, bezogen auf eine durch das Kraftstoffrohr (3) definierte Strömungsrichtung, entlang der der Kraftstoff innerhalb des Düsenhauptkörpers (DR) zu dem Düsenende geführt wird, stromauf liegende Stirnwand (DW) der Düse (D) berandet ist,
- das Zuleitungsreservoir (2A, 2B, 2C) in einem mit dem Düsenhalter (DH) verbundenen Kopfbereich des Düsenhauptkörpers (D) ausgebildet ist,
- mindestens eine Durchgangsöffnung (23, 23.1-23.4; 24; 64) vorgesehen ist, über die Kraftstoff aus dem Zuleitungsreservoir (2A, 2B, 2C) in das Kraftstoffrohr (3) einströmen kann,
- die mindestens eine Durchgangsöffnung (24; 64) für eine Einströmung von Kraftstoff aus dem Zuleitungsreservoir (2A), bezogen auf die Düsenlängsachse (L), im Wesentlichen in axialer Richtung in einen ersten Rohrabschnitt (3A) des Kraftstoffrohres (3) eingerichtet ist, und
- sich die mindestens eine Durchgangsöffnung (24; 64) durch eine im Wesentlichen oder genau senkrecht zu der Düsenlängsachse (L) verlaufende und den ersten Rohrabschnitt (3A) berandende Rückwand (RW) des Kraftstoffrohres (3) oder durch eine das Zuleitungsreservoir (2C) von dem ersten Rohrabschnitt (3A) trennende Trennwand (6) erstreckt,
**dadurch gekennzeichnet, dass** der Kraftstoff über das Kraftstoffrohr (3) bis an die an dem Kraftstoffrohr (3) vorgesehene Kraftstoffaustrittsöffnung (33) geführt ist und ohne eine Vermischung mit Luft in den Brennraum (1030) eingebracht wird und dass an der Rückwand (RW) oder der Trennwand (63) mehrere Durchgangsöffnungen (23, 23.1-23.4) vorgesehen sind.

3. Düsenbaugruppe nach Anspruch 2, **dadurch gekennzeichnet, dass** die Durchgangsöffnungen (24; 64) für eine Einströmung von Kraftstoff aus dem Zuleitungsreservoir (2A), bezogen auf die Düsenlängsachse (L), im Wesentlichen in axialer Richtung in einem ersten Rohrabschnitt (3A) des Kraftstoffrohres (3) eingerichtet sind, wobei sich die Durchgangsöffnungen (24; 64) durch eine im Wesentlichen oder genau senkrecht zu der Düsenlängsachse (L) verlaufende und den ersten Rohrabschnitt (3A) berandende Rückwand (RW) des Kraftstoffrohres (3) oder durch eine das Zuleitungsreservoir (2C) von dem ersten Rohrabschnitt (3A) trennende Trennwand (6) erstrecken.

4. Düsenbaugruppe nach einem der vorhergehenden Ansprüche, **dadurch gekennzeichnet, dass** die Durchgangsöffnungen (23, 23.1-23.4; 24; 64) für die Erzeugung einer Kraftstoffströmung in den ersten Rohrabschnitt (3A) mit einer Bewegungskomponente in eine Umfangsrichtung (U) um die Düsenlängsachse (L) eingerichtet und vorgesehen sind.

5. Düsenbaugruppe nach den Ansprüchen 1 und 4, **dadurch gekennzeichnet, dass** sich die Durchgangsöffnungen (23, 23.1-23.4) entlang einer Erstreckungsrichtung durch die Innenwand (W) erstrecken, die, bezogen auf die Düsenlängsachse (L), schräg oder parallelversetzt zu einer senkrecht zur Düsenlängsachse (L) orientierten Radiallinie verläuft.

6. Düsenbaugruppe nach Anspruch 1, 4 oder 5, **dadurch gekennzeichnet, dass** sich wenigstens zwei der mehreren Durchgangsöffnungen (23.1-23.4) hinsichtlich ihrer Längen (I) und/oder Querschnittsflächen voneinander unterscheiden.

7. Düsenbaugruppe nach den Ansprüchen 2 und 4, **dadurch gekennzeichnet, dass** sich die Durchgangsöffnungen (24; 64) entlang einer Erstreckungsrichtung durch die Rückwand (RW) oder die Trennwand (63) erstrecken, die schräg zur Düsenlängsachse (L) verläuft.

8. Düsenbaugruppe nach einem der vorhergehenden Ansprüche, **dadurch gekennzeichnet, dass** das Zuleitungsreservoir als Ringkammer (2A, 2B) ausgebildet ist.

9. Düsenbaugruppe nach Anspruch 1 oder 6 und nach Anspruch 8, **dadurch gekennzeichnet, dass** sich die Ringkammer (2A) im Querschnitt zu einem Abschnitt einer die Ringkammer (2A) radial außen berandenden Wand hin verjüngt, der einer Zuleitungsöffnung gegenüberliegt, über die Kraftstoff aus der Kraftstoffzuleitung (1) der Ringkammer (2A) zuführbar ist.

10. Düsenbaugruppe nach Anspruch 6 und nach Anspruch 8 oder 9, **dadurch gekennzeichnet, dass** die Querschnittsflächen der Durchgangsöffnungen (23.1-23.4) über den Umfang der Ringkammer (2A) ausgehend von einer ersten Durchgangsöffnung (23.1) zu wenigstens einer weiteren Durchgangsöffnung (23.3) hin derart zunehmen, dass über die Durchgangsöffnungen (23.1-23.4) gleiche Anteile eines Gesamtmassenstroms von in die Ringkammer einströmenden Kraftstoffs in den ersten Rohrabschnitt (3A) strömen, wobei die erste Durchgangsöffnung (23.1) einer Zuleitungsöffnung zugewandt ist, über die Kraftstoff aus der Kraftstoffzuleitung (1) der Ringkammer (2A) zuführbar ist, und die wenigstens eine weitere Durchgangsöffnung (23.3) einem Abschnitt einer die Ringkammer (2A) radial außen berandenden Wand zugewandt ist, die in einer Querschnittsansicht der Zuleitungsöffnung gegenüberliegt.

11. Düsenbaugruppe nach einem der vorhergehenden Ansprüche, **dadurch gekennzeichnet, dass** das Zuleitungsreservoir (2C) über einen zentral, bezogen auf eine durch das Kraftstoffrohr (3) definierten Strömungsrichtung, entlang der der Kraftstoff innerhalb des Düsenhauptkörpers (DR) zu dem Düsenende geführt wird, stromauf des ersten Rohrabschnitts (3A) angeordneten Hohlkörper ausgebildet ist.

12. Düsenbaugruppe nach einem der vorhergehenden Ansprüche, **dadurch gekennzeichnet, dass** innerhalb des Kraftstoffrohres (3) mindestens ein zentral angeordneter Strömungskörper (30; 30A, 30B) vorgesehen ist, an dessen äußerer Mantelfläche dem Kraftstoffrohr (3) zugeführter Kraftstoff entlang strömen kann, wobei
- sich der Strömungskörper (30; 30B) mit einem Ende (301) bis zum Düsenende erstreckt,
- der Strömungskörper (30; 30B) an seinem Ende ein Leitelement (3010) aufweist, über das an der Kraftstoffaustrittsöffnung (33) austretender Kraftstoff bezogen auf die Düsenlängsachse (L) radial nach außen geleitet wird,
- der Strömungskörper (30; 30A, 30B) zapfenförmig oder kegelförmig ausgebildet ist, und
- der Strömungskörper (30; 30A) mit einer Stirnwand (DW) der Düse (D) oder einer Rückwand (RW) des Kraftstoffrohres (3) verbunden ist, oder wobei
- innerhalb des Kraftstoffrohres (3) zwei bezogen auf die Düsenlängsachse (L) axial zueinander beabstandete Strömungskörper (30A, 30B) vorhanden sind.

13. Düsenbaugruppe nach einem der vorhergehenden Ansprüche, **dadurch gekennzeichnet, dass** die Düse (D) an ihrem Düsenende einen mit dem Düsenhauptkörper (DR) verbundenen Düsenkopf (DK) mit wenigstens einem Luftleitkanal (4, 5) umfasst, über den zur Vermischung mit dem aus der Kraftstoffaustrittsöffnung (33) ausgebrachten Kraftstoff vorgesehene Luft in den Brennraum (1030) einbringbar ist, und
dass der Luftleitkanal (4, 5) an dem Düsenende mindestens eine Luftaustrittsöffnung umfasst und das Kraftstoffrohr (3) mit seiner Kraftstoffaustrittsöffnung (33) gegenüber der mindestens einen Luftaustrittsöffnung, bezogen auf die Düsenlängsachse (L), axial vorsteht.

14. Düsenbaugruppe nach einem der vorhergehenden Ansprüche, **dadurch gekennzeichnet, dass** die Düse (D) zum Eindüsen von gasförmigem Kraftstoff, insbesondere von Wasserstoff eingerichtet und vorgesehen ist.

15. Triebwerk mit mindestens einer Düsenbaugruppe nach einem der vorhergehenden Ansprüche.

## Claims

1. Nozzle assembly for a combustion chamber (103) of an engine (T), with at least one nozzle (D) for injecting fuel into a combustion space (1030) of the combustion chamber (103), wherein the nozzle (D) comprises a nozzle main body (DR) extending along a nozzle longitudinal axis (L) and a nozzle holder (DH) connected to the nozzle main body (DR) and at least one fuel supply line (1), wherein
- the nozzle main body (DR) comprises a central fuel pipe (3) extending along the nozzle longitudinal axis (L) and sealed against an in-flow of air, in which fuel supplied via the at least one fuel supply line (1) can be guided within the nozzle main body (DR) up to a fuel outlet opening (33) of the fuel pipe (3) provided at a nozzle end of the nozzle (D), via which the fuel can be introduced into the combustion space (1030),
- the nozzle (D) comprises a supply line reservoir (2A, 2B, 2C) connected to the fuel supply line (1), to which fuel can be supplied from the fuel supply line (1) and from which fuel can be supplied to the fuel pipe (3),
- the supply line reservoir (2A, 2B, 2C) is provided in a region of the nozzle (D) which is bordered by an upstream end wall (DW) of the nozzle (D), relative to a flow direction defined by the fuel pipe (3), along which the fuel is guided within the nozzle main body (DR) to the nozzle end,
- the supply line reservoir (2A, 2B, 2C) is formed in a head region of the nozzle main body (DR) connected to the nozzle holder (DH),
- at least one through-opening (23, 23.1-23.4; 24; 64) is provided through which fuel can flow from the supply line reservoir (2A, 2B, 2C) into the fuel pipe (3),
- the at least one through-opening (23, 23.1-23.4) for an in-flow of fuel from the supply line reservoir (2A), relative to the nozzle longitudinal axis (L), is arranged substantially radially inwards into a first pipe section (3A) of the fuel pipe (3) and
**characterised in that** the fuel is guided via the fuel pipe (3) up to the fuel outlet opening (33) provided on the fuel pipe (3) and is introduced into the combustion space (1030) without mixing with air, **in that** the at least one through-opening (23, 23.1-23.4) extends radially inwards through an inner wall (W) of the fuel pipe (3) extending about the nozzle longitudinal axis (L) and bordering the first pipe section (3A), and **in that** a plurality of through-openings (23, 23.1-23.4) are provided on the inner wall (W).

2. Nozzle assembly for a combustion chamber (103) of an engine (T), with at least one nozzle (D) for injecting fuel into a combustion space (1030) of the combustion chamber (103), wherein the nozzle (D) comprises a nozzle main body (DR) extending along a nozzle longitudinal axis (L) and a nozzle holder (DH) connected to the nozzle main body (DR) and at least one fuel supply line (1), wherein
- the nozzle main body (DR) comprises a central fuel pipe (3) extending along the nozzle longitudinal axis (L) and sealed against an in-flow of air, in which fuel supplied via the at least one fuel supply line (1) can be guided within the nozzle main body (DR) up to a fuel outlet opening (33) of the fuel pipe (3) provided at a nozzle end of the nozzle (D), via which the fuel can be introduced into the combustion space (1030),
- the nozzle (D) comprises a supply line reservoir (2A, 2B, 2C) connected to the fuel supply line (1), to which fuel can be supplied from the fuel supply line (1) and from which fuel can be supplied to the fuel pipe (3),
- the supply line reservoir (2A, 2B, 2C) is provided in a region of the nozzle (D) which is bordered by an upstream end wall (DW) of the nozzle (D), relative to a flow direction defined by the fuel pipe (3), along which the fuel is guided within the nozzle main body (DR) to the nozzle end,
- the supply line reservoir (2A, 2B, 2C) is formed in a head region of the nozzle main body (D) connected to the nozzle holder (DH),
- at least one through-opening (23, 23.1-23.4; 24; 64) is provided through which fuel can flow from the supply line reservoir (2A, 2B, 2C) into the fuel pipe (3),
- the at least one through-opening (24; 64) for an in-flow of fuel from the supply line reservoir (2A), relative to the nozzle longitudinal axis (L), is arranged substantially in the axial direction into a first pipe section (3A) of the fuel pipe (3) and
- the at least one through-opening (24; 64) extends through a rear wall (RW) of the fuel pipe (3) extending substantially or exactly perpendicular to the nozzle longitudinal axis (L) and bordering the first pipe section (3A) or through a partition wall (6) separating the supply line reservoir (2C) from the first pipe section (3A),
**characterised in that** the fuel is guided via the fuel pipe (3) up to the fuel outlet opening (33) provided on the fuel pipe (3) and is introduced into the combustion space (1030) without mixing with air, and **in that** a plurality of through-openings (23, 23.1-23.4) are provided on the rear wall (RW) or the partition wall (63).

3. Nozzle assembly according to claim 2, **characterised in that** the through-openings (24; 64) for an in-flow of fuel from the supply line reservoir (2A), relative to the nozzle longitudinal axis (L), are arranged substantially in the axial direction in a first pipe section (3A) of the fuel pipe (3), wherein the through-openings (24; 64) extend through a rear wall (RW) of the fuel pipe (3) extending substantially or exactly perpendicular to the nozzle longitudinal axis (L) and bordering the first pipe section (3A) or through a partition wall (6) separating the supply line reservoir (2C) from the first pipe section (3A).

4. Nozzle assembly according to any of the preceding claims, **characterised in that** the through-openings (23, 23.1-23.4; 24; 64) are arranged and provided for generating a fuel flow into the first pipe section (3A) with a movement component in a circumferential direction (U) about the nozzle longitudinal axis (L).

5. Nozzle assembly according to claims 1 and 4, **characterised in that** the through-openings (23, 23.1-23.4) extend along a direction of extension through the inner wall (W), which extends, relative to the nozzle longitudinal axis (L), obliquely or offset parallel to a radial line oriented perpendicular to the nozzle longitudinal axis (L).

6. Nozzle assembly according to claim 1, 4 or 5, **characterised in that** at least two of said plurality of through-openings (23.1-23.4) differ from one another in terms of their lengths (I) and/or cross-sectional areas.

7. Nozzle assembly according to claims 2 and 4, **characterised in that** the through-openings (24; 64) extend along a direction of extension through the rear wall (RW) or the partition wall (63), which extends obliquely to the nozzle longitudinal axis (L).

8. Nozzle assembly according to any of the preceding claims, **characterised in that** the supply line reservoir is formed as an annular chamber (2A, 2B).

9. Nozzle assembly according to claim 1 or 6 and according to claim 8, **characterised in that** in cross section, the annular chamber (2A) tapers towards a section of a wall which borders the annular chamber (2A) radially on the outside and which lies opposite a supply line opening via which fuel can be supplied from the fuel supply line (1) to the annular chamber (2A).

10. Nozzle assembly according to claim 6 and according to claim 8 or 9, **characterised in that** the cross-sectional areas of the through-openings (23.1-23.4) increase over the circumference of the annular chamber (2A) starting from a first through-opening (23.1) towards at least one further through-opening (23.3) in such a way that equal proportions of a total mass flow of fuel flowing into the annular chamber flow into the first pipe section (3A) via the through-openings (23.1-23.4), wherein the first through-opening (23.1) faces a supply line opening, via which fuel can be supplied from the fuel supply line (1) to the annular chamber (2A), and the at least one further through-opening (23.3) faces a section of a wall bordering the annular chamber (2A) radially on the outside, which wall lies opposite the supply line opening in a cross-sectional view.

11. Nozzle assembly according to any of the preceding claims, **characterised in that** the supply line reservoir (2C) is formed upstream of the first pipe section (3A) via a hollow body arranged centrally, relative to a flow direction defined by the fuel pipe (3), along which the fuel is guided within the nozzle main body (DR) to the nozzle end.

12. Nozzle assembly according to any of the preceding claims, **characterised in that** at least one centrally arranged flow body (30; 30A, 30B) is provided within the fuel pipe (3), along whose outer lateral surface fuel supplied to the fuel pipe (3) can flow, wherein
- the flow body (30; 30B) extends with one end (301) to the nozzle end,
- the flow body (30; 30B) has at its end a guide element (3010), via which fuel emerging at the fuel outlet opening (33) is guided radially outwards relative to the nozzle longitudinal axis (L),
- the flow body (30; 30A, 30B) is pin-shaped or conical, and
- the flow body (30; 30A) is connected to an end wall (DW) of the nozzle (D) or a rear wall (RW) of the fuel pipe (3), or wherein
- two flow bodies (30A, 30B), which are axially spaced apart from one another relative to the nozzle longitudinal axis (L), are present within the fuel pipe (3).

13. Nozzle assembly according to any of the preceding claims, **characterised in that** the nozzle (D) comprises at its nozzle end a nozzle head (DK) connected to the nozzle main body (DR) with at least one air guide duct (4, 5) via which air provided for mixing with the fuel discharged from the fuel outlet opening (33) can be introduced into the combustion space (1030), and
**in that** the air guide duct (4, 5) comprises at least one air outlet opening at the nozzle end and the fuel pipe (3) projects axially with its fuel outlet opening (33) in relation to the at least one air outlet opening, relative to the nozzle longitudinal axis (L).

14. Nozzle assembly according to any of the preceding claims, **characterised in that** the nozzle (D) is arranged and provided for injecting gaseous fuel, in particular hydrogen.

15. Engine with at least one nozzle assembly according to any of the preceding claims.

## Revendications

1. Ensemble injecteur pour une chambre de combustion (103) d'un moteur (T), avec au moins une buse (D) pour l'injection de carburant dans un espace de combustion (1030) de ladite chambre de combustion (103), la buse (D) comprenant un corps principal de buse (DR) s'étendant le long d'un axe longitudinal de buse (L) et un porte-buse (DH) relié au corps principal de buse (DR) et présentant au moins une conduite d'alimentation en carburant (1), dans lequel
- le corps principal de buse (DR) comprend un tuyau de carburant (3) central, s'étendant le long de l'axe longitudinal de buse (L) et rendu étanche à un flux d'air entrant, dans lequel le carburant acheminé par l'intermédiaire de ladite au moins une conduite d'alimentation en carburant (1) peut être guidé à l'intérieur du corps principal de buse (DR) jusqu'à un orifice de sortie de carburant (33) du tuyau de carburant (3), prévu à une extrémité de la buse (D), par l'intermédiaire duquel le carburant peut être introduit dans l'espace de combustion (1030),
- la buse (D) comprend un réservoir d'alimentation (2A, 2B, 2C) relié à la conduite d'alimentation en carburant (1), auquel le carburant peut être acheminé à partir de la conduite d'alimentation en carburant (1) et à partir duquel le carburant peut être acheminé vers le tuyau de carburant (3),
- le réservoir d'alimentation (2A, 2B, 2C) est prévu dans une zone de la buse (D) délimitée par une paroi frontale (DW) de la buse (D) en amont par rapport à un sens d'écoulement défini par le tuyau de carburant (3), suivant lequel le carburant est guidé à l'intérieur du corps principal de buse (DR) vers l'extrémité de la buse,
- le réservoir d'alimentation (2A, 2B, 2C) est réalisé dans une zone de tête du corps principal de buse (DR) reliée au porte-buse (DH),
- au moins un orifice de passage (23, 23.1-23.4 ; 24 ; 64) est prévu, par lequel le carburant peut s'écouler du réservoir d'alimentation (2A, 2B, 2C) dans le tuyau de carburant (3),
- ledit au moins un orifice de passage (23, 23.1-23.4) est configuré pour un écoulement entrant de carburant depuis le réservoir d'alimentation (2A), sensiblement radialement vers l'intérieur, par rapport à l'axe longitudinal de buse (L), dans une première section (3A) du tuyau de carburant (3) et
**caractérisé en ce que** le carburant est guidé par le tuyau de carburant (3) jusqu'à l'orifice de sortie de carburant (33) prévu sur le tuyau de carburant (3) et est introduit dans l'espace de combustion (1030) sans mélange avec de l'air, **en ce que** ledit au moins un orifice de passage (23, 23.1-23.4) s'étend radialement vers l'intérieur à travers une paroi intérieure (W) du tuyau de carburant (3) s'étendant autour de l'axe longitudinal de buse (L) et délimitant la première section de tuyau (3A) et **en ce que** plusieurs orifices de passage (23, 23.1-23.4) sont prévus sur la paroi intérieure (W).

2. Ensemble injecteur pour une chambre de combustion (103) d'un moteur (T), avec au moins une buse (D) pour l'injection de carburant dans un espace de combustion (1030) de ladite chambre de combustion (103), la buse (D) comprenant un corps principal de buse (DR) s'étendant le long d'un axe longitudinal de buse (L) et un porte-buse (DH) relié au corps principal de buse (DR) et présentant au moins une conduite d'alimentation en carburant (1), dans lequel
- le corps principal de buse (DR) comprend un tuyau de carburant (3) central, s'étendant le long de l'axe longitudinal de buse (L) et rendu étanche à un flux d'air entrant, dans lequel le carburant acheminé par l'intermédiaire de ladite au moins une conduite d'alimentation en carburant (1) peut être guidé à l'intérieur du corps principal de buse (DR) jusqu'à un orifice de sortie de carburant (33) du tuyau de carburant (3), prévu à une extrémité de la buse (D), par l'intermédiaire duquel le carburant peut être introduit dans l'espace de combustion (1030),
- la buse (D) comprend un réservoir d'alimentation (2A, 2B, 2C) relié à la conduite d'alimentation en carburant (1), auquel le carburant peut être acheminé à partir de la conduite d'alimentation en carburant (1) et à partir duquel le carburant peut être acheminé vers le tuyau de carburant (3),
- le réservoir d'alimentation (2A, 2B, 2C) est prévu dans une zone de la buse (D) délimitée par une paroi frontale (DW) de la buse (D) en amont par rapport à un sens d'écoulement défini par le tuyau de carburant (3), suivant lequel le carburant est guidé à l'intérieur du corps principal de buse (DR) vers l'extrémité de la buse,
- le réservoir d'alimentation (2A, 2B, 2C) est réalisé dans une zone de tête du corps principal de buse (D) reliée au porte-buse (DH),
- au moins un orifice de passage (23, 23.1-23.4 ; 24 ; 64) est prévu, par lequel le carburant peut s'écouler du réservoir d'alimentation (2A, 2B, 2C) dans le tuyau de carburant (3),
- ledit au moins un orifice de passage (24 ; 64) est configuré pour un écoulement entrant de carburant depuis le réservoir d'alimentation (2A), sensiblement dans une direction axiale, par rapport à l'axe longitudinal de buse (L), dans une première section (3A) du tuyau de carburant (3) et
- ledit au moins un orifice de passage (24 ; 64) s'étend à travers une paroi arrière (RW) du tuyau de carburant (3) s'étendant sensiblement ou exactement perpendiculairement à l'axe longitudinal de buse (L) et délimitant la première section de tuyau (3A), ou à travers une paroi de séparation (6) séparant le réservoir d'alimentation (2C) de la première section de tuyau (3A),
**caractérisé en ce que** le carburant est guidé par le tuyau de carburant (3) jusqu'à l'orifice de sortie de carburant (33) prévu sur le tuyau de carburant (3) et est introduit dans l'espace de combustion (1030) sans mélange avec de l'air, et **en ce que** plusieurs orifices de passage (23, 23.1-23.4) sont prévus sur la paroi arrière (RW) ou la paroi de séparation (63).

3. Ensemble injecteur selon la revendication 2, **caractérisé en ce que** les orifices de passage (24 ; 64) sont configurés pour un écoulement entrant de carburant depuis le réservoir d'alimentation (2A), sensiblement dans une direction axiale, par rapport à l'axe longitudinal de buse (L), dans une première section (3A) du tuyau de carburant (3), les orifices de passage (24 ; 64) s'étendant à travers une paroi arrière (RW) du tuyau de carburant (3), s'étendant sensiblement ou exactement perpendiculairement à l'axe longitudinal de buse (L) et délimitant la première section de tuyau (3A), ou à travers une paroi de séparation (6) séparant le réservoir d'alimentation (2C) de la première section de tuyau (3A).

4. Ensemble injecteur selon l'une quelconque des revendications précédentes, **caractérisé en ce que** les orifices de passage (23, 23.1-23.4 ; 24 ; 64) sont configurés et prévus pour générer un écoulement de carburant dans la première section de tuyau (3A) avec une composante de mouvement dans une direction circonférentielle (U) autour de l'axe longitudinal de buse (L).

5. Ensemble injecteur selon les revendications 1 et 4, **caractérisé en ce que** les orifices de passage (23, 23.1-23.4) s'étendent suivant une direction d'extension à travers la paroi intérieure (W), qui, par rapport à l'axe longitudinal de buse (L), s'étend obliquement ou parallèlement décalée par rapport à une ligne radiale orientée perpendiculairement à l'axe longitudinal de buse (L).

6. Ensemble injecteur selon l'une des revendications 1, 4 ou 5, **caractérisé en ce qu'**au moins deux des plusieurs orifices de passage (23.1-23.4) diffèrent l'un de l'autre par leurs longueurs (I) et/ou leurs surfaces de section transversale.

7. Ensemble injecteur selon les revendications 2 et 4, **caractérisé en ce que** les orifices de passage (24 ; 64) s'étendent suivant une direction d'extension à travers la paroi arrière (RW) ou la paroi de séparation (63), qui s'étend obliquement par rapport à l'axe longitudinal de buse (L).

8. Ensemble injecteur selon l'une quelconque des revendications précédentes, **caractérisé en ce que** le réservoir d'alimentation est conçu sous la forme d'une chambre annulaire (2A, 2B).

9. Ensemble injecteur selon l'une des revendications 1 ou 6 et selon la revendication 8, **caractérisé en ce que** la chambre annulaire (2A) se rétrécit, en section transversale, en direction d'une partie d'une paroi délimitant radialement vers l'extérieur la chambre annulaire (2A), qui se situe à l'opposé d'un orifice d'alimentation par lequel le carburant peut être acheminé de la conduite d'alimentation en carburant (1) vers la chambre annulaire (2A).

10. Ensemble injecteur selon la revendication 6 et selon l'une des revendications 8 ou 9, **caractérisé en ce que** les surfaces de section transversale des orifices de passage (23.1-23.4) augmentent sur la circonférence de la chambre annulaire (2A), à partir d'un premier orifice de passage (23.1) en direction d'au moins un autre orifice de passage (23.3), de sorte que, par les orifices de passage (23.1-23.4), des fractions égales d'un débit massique total de carburant entrant dans la chambre annulaire s'écoulent dans la première section de tuyau (3A), le premier orifice de passage (23.1) faisant face à un orifice d'alimentation par lequel le carburant peut être acheminé depuis la conduite d'alimentation en carburant (1) vers la chambre annulaire (2A), et ledit au moins un autre orifice de passage (23.3) faisant face à une partie d'une paroi délimitant radialement vers l'extérieur la chambre annulaire (2A), laquelle est opposée à l'orifice d'alimentation dans une vue en section transversale.

11. Ensemble injecteur selon l'une quelconque des revendications précédentes, **caractérisé en ce que** le réservoir d'alimentation (2C) est formé par un corps creux disposé de manière centrale en amont de la première section de tuyau (3A), par rapport à un sens d'écoulement défini par le tuyau de carburant (3), suivant lequel le carburant est guidé à l'intérieur du corps principal de buse (DR) vers l'extrémité de la buse.

12. Ensemble injecteur selon l'une quelconque des revendications précédentes, **caractérisé en ce qu'au** moins un corps d'écoulement (30 ; 30A, 30B) disposé de façon centrale est prévu à l'intérieur du tuyau de carburant (3), sur la surface latérale extérieure duquel le carburant amené au tuyau de carburant (3) peut s'écouler, dans lequel
- le corps d'écoulement (30 ; 30B) s'étend par une extrémité (301) jusqu'à l'extrémité de la buse,
- le corps d'écoulement (30 ; 30B) présente à son extrémité un élément de guidage (3010), par lequel le carburant sortant par l'orifice de sortie de carburant (33) est dirigé radialement vers l'extérieur par rapport à l'axe longitudinal de buse (L),
- le corps d'écoulement (30 ; 30A, 30B) est réalisé sous une forme cylindrique ou conique, et
- le corps d'écoulement (30 ; 30A) est relié à une paroi frontale (DW) de la buse (D) ou à une paroi arrière (RW) du tuyau de carburant (3), ou dans lequel
- à l'intérieur du tuyau de carburant (3), deux corps d'écoulement (30A, 30B) espacés axialement l'un de l'autre par rapport à l'axe longitudinal de buse (L) sont présents.

13. Ensemble injecteur selon l'une quelconque des revendications précédentes, **caractérisé en ce que** la buse (D) comprend à son extrémité une tête de buse (DK) reliée au corps principal de buse (DR) et présentant au moins un canal de guidage d'air (4, 5) par lequel l'air destiné au mélange avec le carburant délivré par l'orifice de sortie de carburant (33) peut être introduit dans l'espace de combustion (1030), et
**en ce que** le canal de guidage d'air (4, 5) comprend au moins un orifice de sortie d'air à l'extrémité de la buse et **en ce que** le tuyau de carburant (3), avec son orifice de sortie de carburant (33), fait saillie axialement vis-à-vis dudit au moins un orifice de sortie d'air, par rapport à l'axe longitudinal de buse (L).

14. Ensemble injecteur selon l'une quelconque des revendications précédentes, **caractérisé en ce que** la buse (D) est conçue et prévue pour l'injection de carburant gazeux, en particulier d'hydrogène.

15. Moteur avec au moins un ensemble injecteur selon l'une quelconque des revendications précédentes.
